# EUROPEAN PATENT APPLICATION

(11) **EP 4 851 769 A1**
(43) Date of publication of application: **09.12.2026**
(21) Application number: 25829314.1
(22) Date of filing: 28.02.2025
(51) Int. Cl.: G06F 3/0481

(54) **INFORMATION RECORDING METHOD AND ELECTRONIC DEVICE**

(30) Priority: 20.06.2024 CN 202410808527; 22.08.2024 CN 202411163290
(71) Applicant: HUAWEI TECHNOLOGIES CO., LTD., Shenzhen, Guangdong 518129 (CN)
(72) Inventor: XIA, Meijuan, Shenzhen, Guangdong 518129 (CN); CHEN, Jianhui, Shenzhen, Guangdong 518129 (CN); QI, Shengwang, Shenzhen, Guangdong 518129 (CN); ZHU, Jiashe, Shenzhen, Guangdong 518129 (CN); JIANG, Yijie, Shenzhen, Guangdong 518129 (CN)
(74) Representative: Huawei European IPR
(86) International application number: PCT/CN2025/080063
(87) International publication number: WO 2025/260822

(57) **Abstract**

This application provides an information recording method and an electronic device, and relates to the field of terminal technologies. The method includes: obtaining first memory information, where the first memory information is information that is extracted based on display content in a first interface and that matches a preset memory type, and the memory type corresponds to at least one attribute item; and displaying the first memory information in a smart assistant. In this solution, a user does not need to autonomously memorize a large amount of information, and may obtain required information at any time through the smart assistant based on a requirement. This can reduce operation complexity of information obtaining, thereby improving user experience.

## Description

This application claims priorities to Chinese Patent Application No. 202410808527.0, filed with the China National Intellectual Property Administration on June 20, 2024 and entitled "METHOD FOR OBTAINING MEMORY INFORMATION AND ELECTRONIC DEVICE", and to Chinese Patent Application No. 202411163290.1, filed with the China National Intellectual Property Administration on August 22, 2024 and entitled "INFORMATION RECORDING METHOD AND ELECTRONIC DEVICE", both of which are incorporated herein by reference in their entireties.

### TECHNICAL FIELD

This application relates to the field of terminal technologies, and more specifically, to an information recording method and an electronic device.

### BACKGROUND

As types of functions of terminal applications continuously increase, information, for example, train ticket information, hotel order information, movie ticket order information, and related card information, carried in the applications becomes increasingly rich. The information is usually used a plurality of times in other scenarios or other applications. To reuse the information, a user needs to autonomously record the information in advance. It is a heavy burden for the user to autonomously record the information, and the recorded information is usually incomplete. Alternatively, when reusing the information, the user may search for the information in the applications from which the information comes. However, this operation is inconvenient, and sometimes desired information cannot be found.

### SUMMARY

To resolve the foregoing technical problems, this application provides an information recording method and an electronic device, to reduce operation complexity of repeatedly using information in a terminal application by a user, thereby improving user experience.

According to a first aspect, an information recording method is provided. The method may be performed by an electronic device, or may be performed by a component (for example, a processor, a chip, or a chip system) of the electronic device, or may be implemented by a logical module or software that can implement all or some functions of the electronic device.

The method includes: obtaining first memory information, where the first memory information is extracted based on display content in a first interface, and the first memory information matches a preset memory type, and the memory type corresponds to at least one attribute item; and displaying the first memory information in a smart assistant.

According to the information recording method provided in this application, the electronic device can record information based on content displayed on a terminal, and obtain memorized information in the smart assistant. According to the method, a user does not need to autonomously record a large amount of information, and may obtain required information at any time through the smart assistant based on a requirement. This can reduce operation complexity of repeatedly using information in a terminal application, thereby improving user experience.

In a possible implementation, before displaying the first memory information in the smart assistant, the method further includes: obtaining a first user operation, where the first user operation is used to indicate to save the first memory information, or the first user operation indicates the display content.

According to this solution, the electronic device may save the first memory information based on the first user operation. Alternatively, the electronic device may determine the display content based on the first user operation, and obtain the first memory information based on the display content.

In a possible implementation, the first user operation is used to indicate to save the first memory information. Before obtaining the first user operation, the method further includes: displaying prompt information, where the prompt information indicates that there is to-be-saved memory information currently.

According to this solution, the electronic device may display the prompt information after obtaining the first memory information, the user may perform the first user operation based on the prompt information, and the electronic device may save the first memory information based on the first user operation. According to the method, the first memory information can be actively obtained without being triggered by the user.

In a possible implementation, the first user operation indicates the display content, and the display content is one of the following: interface content in the first interface of a first application, display content in a first area of the first interface, a first text in the first interface, and a first picture in the first interface.

In a possible implementation, displaying the prompt information includes: if a display interface is not switched from the first interface, displaying the prompt information in a dialog window of the application, where the dialog window is displayed in the first interface in a floating manner; and displaying the first memory information in the smart assistant includes: displaying the first memory information in the dialog window in response to the first user operation performed on the dialog window.

For example, the first user operation may be a voice or text instruction input by the user in the dialog window, or may be an operation like tapping the prompt information.

This solution can support the user in obtaining the memory information in a voice interaction scenario or a non-voice interaction scenario, and guide, by prompting the user by using the prompt information in a scenario in which the user does not switch the display interface, the user to save the memory information.

In a possible implementation, displaying the prompt information includes: if a display interface is switched from the first interface to a second interface, displaying the prompt information in the second interface; and displaying the first memory information in the smart assistant includes: displaying the first memory information in a third interface of the smart assistant in response to the first user operation performed on the prompt information or in response to the first user operation performed on an application corresponding to the prompt information, where the third interface includes the to-be-saved memory information.

For example, the prompt information may be a pushed notification.

This solution can guide, by prompting the user by pushing the prompt information in a scenario in which the user has switched the display interface, the user to save the memory information. In this way, the user can perceive in real time that the electronic device performs the operation of obtaining the memory information, and can save the obtained memory information at any time as required.

In a possible implementation, the third interface includes a confirmation control corresponding to the first memory information, and the method further includes: saving the first memory information in the smart assistant in response to an operation performed on the confirmation control.

In a possible implementation, obtaining the first memory information includes: scanning the display interface of the first application; and obtaining the first memory information based on the currently scanned first interface, where the first interface is a display interface of the first application.

In a possible implementation, the first application is a target application, and the electronic device is capable of obtaining the memory information by scanning a display interface of the target application.

In a possible implementation, the display content is the interface content in the first interface of the first application; and obtaining the first memory information includes: obtaining the first memory information based on the interface content in the first interface in response to the first user operation performed on a dialog window of the smart assistant, where the dialog window is displayed in the first interface in a floating manner, and the first interface is a display interface of the first application.

According to this solution, when the user has a memory requirement, the user may obtain the memory information by waking up the smart assistant.

In a possible implementation, the display content is the content in the first area of the first interface, and before obtaining the first memory information, the method further includes: determining the first area in response to the first user operation performed by the user in the first interface.

In a possible implementation, before determining the first area in response to the first user operation performed by the user in the first interface, the method further includes: performing AI Touch in a fourth interface in response to an operation performed in the fourth interface, to obtain the first interface, where the first interface includes a first control; and enabling a circle-selection function in response to an operation performed on the first control.

According to this solution, the user may indicate the display content through an operation like a circle-selection operation or a line drawing operation, and the electronic device may obtain the memory information based on the display content indicated by the user.

In a possible implementation, the first interface further includes a second control; and obtaining the first memory information includes: waking up the smart assistant in response to an operation performed on the second control, and displaying, in a dialog box of the smart assistant, an image corresponding to the first area; and obtaining the first memory information based on content in the image.

In a possible implementation, the display content is the first text, and before obtaining the first memory information, the method further includes: copying the first text in response to the first user operation performed by the user in the first interface.

According to this solution, the electronic device may obtain the memory information based on the copied text.

In a possible implementation, obtaining the first memory information includes: displaying a first window in a fifth interface in response to an operation performed on a third control in the fifth interface of the smart assistant, where the first window includes a fourth control, saved memory information is displayed in the fifth interface, and the third control is used to add memory information; displaying the first text in the first window in response to an operation performed on the fourth control; and extracting the first text from the first window to obtain the first memory information.

In this solution, an entry for adding memory information by the user is set, so that the user can obtain the memory information when the user has a memory requirement.

In a possible implementation, the display content is the first picture, and before obtaining the first memory information, the method further includes: displaying the first interface in response to the first user operation performed on a thumbnail of the first picture in a sixth interface, where the first interface includes the first picture.

According to this solution, the electronic device may obtain the memory information based on the picture.

In a possible implementation, obtaining the first memory information includes: performing text recognition on the first picture to obtain a recognized text; displaying a seventh interface of the smart assistant in response to an operation performed on a fifth control in the first interface, where a second window is displayed in the seventh interface of the smart assistant, and the second window includes the recognized text; and obtaining the first memory information based on the recognized text in response to an operation performed on a sixth control in the second window.

In a possible implementation, obtaining the first memory information includes: obtaining the first memory information based on the first picture in response to the first user operation performed on a seventh control in the first interface, where the seventh control is located in a third window in the first interface, and the first picture is displayed in the third window.

In a possible implementation, before responding to the first user operation performed on the thumbnail of the first picture in the second interface, the method further includes: displaying a fourth window in an eighth interface in response to an operation performed on an eighth control in the eighth interface of the smart assistant, where the fourth window includes a ninth control, saved memory information is displayed in the eighth interface, and the eighth control is used to add memory information; displaying a first option and a second option in the fourth window in response to an operation performed on the ninth control, where the first option is used to select a picture in a gallery, and the second option is used to take a picture; and displaying the sixth interface in response to the operation performed on the first option, where the sixth interface includes a thumbnail of at least one picture in the gallery.

In a possible implementation, before displaying the first memory information in the smart assistant, the method further includes: displaying, in the smart assistant, a memory type that matches the display content in the first interface and at least one attribute item corresponding to the memory type.

In a possible implementation, a part or all of the at least one attribute item is editable.

According to this solution, the user may edit the attribute item based on a requirement.

In a possible implementation, the smart assistant includes a tenth control, and the method further includes: displaying a first menu bar in response to an operation performed on the tenth control, where the first menu bar includes a plurality of memory type options; and displaying, in the smart assistant in response to an operation performed on a first memory type option in the plurality of memory type options, a first memory type that matches the display content in the first interface and at least one attribute item corresponding to the first memory type.

According to this solution, the user may select a memory type based on a requirement to obtain required memory information.

According to a second aspect, an embodiment of this application provides an electronic device. The electronic device includes one or more processors and a memory. The memory is coupled to the one or more processors. The memory is configured to store computer program code, the computer program code includes computer instructions, and the one or more processors invoke the computer instructions, to enable the electronic device to perform the method in the first aspect.

According to a third aspect, an embodiment of this application provides a chip. The chip is used in an electronic device, and the chip includes one or more processors. The processor is configured to invoke computer instructions to enable the electronic device to perform the method in the first aspect.

According to a fourth aspect, an embodiment of this application provides a computer-readable storage medium. The computer-readable storage medium stores a computer program. When the computer program is executed by a processor, the method in the first aspect is implemented.

According to a fifth aspect, an embodiment of this application provides a computer program product. The computer program product includes a computer program. When the computer program is run by an electronic device, the electronic device is enabled to implement the method in the first aspect.

It should be understood that, for beneficial effect of the second aspect to the fifth aspect, refer to related descriptions in the first aspect. Details are not described herein again.

### BRIEF DESCRIPTION OF DRAWINGS

FIG. 1(a) to FIG. 1(d) to FIG. 12(a) to FIG. 12 (e) are diagrams of user interfaces for obtaining memory information according to an embodiment of this application;
FIG. 13 is a schematic flowchart of an information recording method according to an embodiment of this application;
FIG. 14 to FIG. 17(a) to FIG. 17(d) are diagrams of interfaces for displaying a memory type and a corresponding attribute item according to an embodiment of this application;
FIG. 18A and FIG. 18B are a schematic flowchart of an information recording method according to an embodiment of this application;
FIG. 19 is a diagram of a system architecture according to an embodiment of this application;
FIG. 20 is a diagram of a structure of an electronic device according to an embodiment of this application; and
FIG. 21 is a diagram of a structure of a chip according to an embodiment of this application.

### DESCRIPTION OF EMBODIMENTS

The following describes the technical solutions in embodiments of this application with reference to the accompanying drawings in embodiments of this application.

This application relates to an electronic device, and a display is disposed on the electronic device. For example, the electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an artificial intelligence (artificial intelligence, AI) device, a wearable device, a vehicle-mounted device (for example, a head unit), a smart home device, or a smart city device. A specific type of the electronic device is not particularly limited in embodiments of this application.

In a technology, a user may save screen information, for example, train ticket information, hotel order information, movie ticket order information, and related card information, in a form of picture by taking a screenshot. However, this method cannot help the user understand and memorize content in pictures. In addition, when the user needs to search for information, the user needs to manually browse the pictures and search for information required by the user from various pictures. Consequently, the process is complex.

To resolve a problem that it is inconvenient for the user to obtain and search for information, this application provides an information recording method. An electronic device may obtain, actively or under triggering of a user, information that is suitable for memory in a picture, a text, an application interface, or the like, and display and save the obtained memory information in a smart assistant, to reduce operation complexity of information obtaining, thereby improving user experience.

In this application, the smart assistant may also be referred to as a voice assistant, an intelligent assistant, an artificial intelligence (artificial intelligence, AI) assistant, an intelligent voice, a digital assistant, a virtual assistant, or the like. The smart assistant may be understood as an information processing system. The system may identify a natural language input in a voice form and/or a text form to infer a user intent, and perform a corresponding action based on the inferred user intent. In addition, the system may respond to an input of the user in an output form like an audible form (for example, a voice) or a visible form (for example, a text or a widget).

In embodiments of this application, the memory information may be displayed and saved in the smart assistant in a form of widget. It should be understood that a form of displaying and saving the memory information is not limited in this application. For example, the memory information may alternatively be displayed and saved in the smart assistant in a form of text or picture.

For example, the memory information may be address information, card information, order information, or the like. For example, the order information may be train ticket order information, movie ticket order information, hotel order information, or scenic spot ticket order information. The card information may be identity card information, passport information, business card information, or the like. It should be understood that a specific type of the memory information is not limited in this application.

With reference to the accompanying drawings, the following uses an example in which the smart assistant is "Celia" to describe interaction between a user and an electronic device related to obtaining of memory information in different scenarios. It should be understood that "Celia" is an application (application, APP), and is merely a specific example of the smart assistant. The smart assistant may alternatively be another APP, an applet, or the like.

### Scenario 1: Obtain memory information based on a display interface of an application.

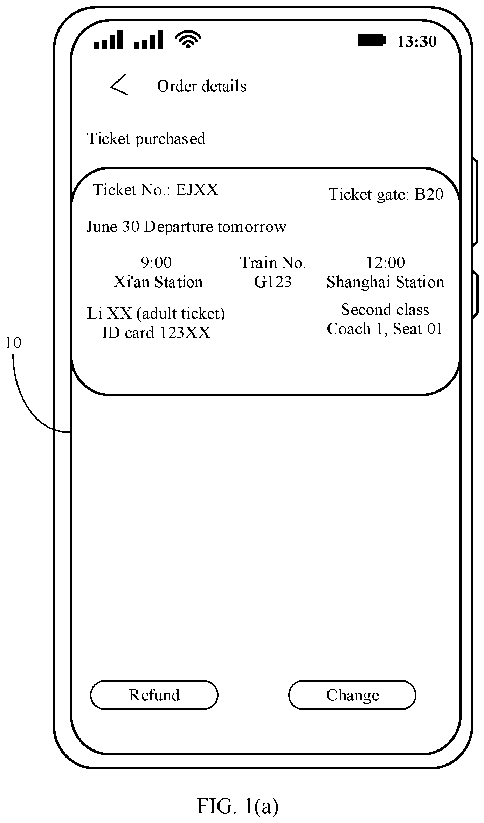

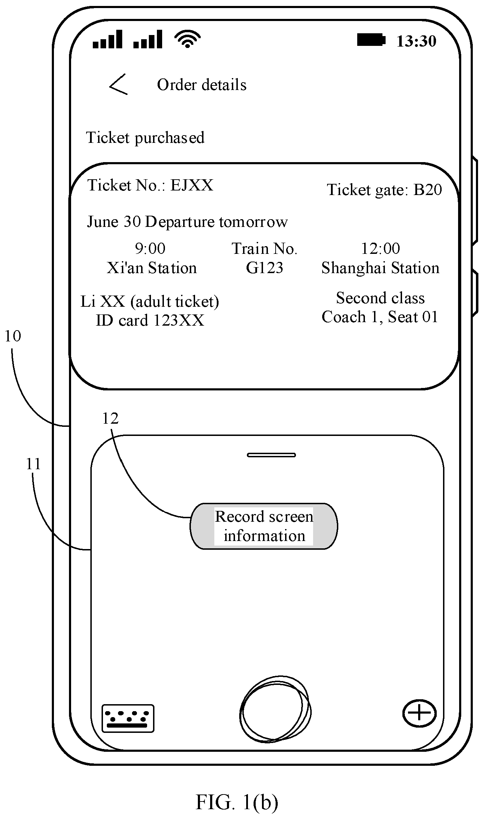

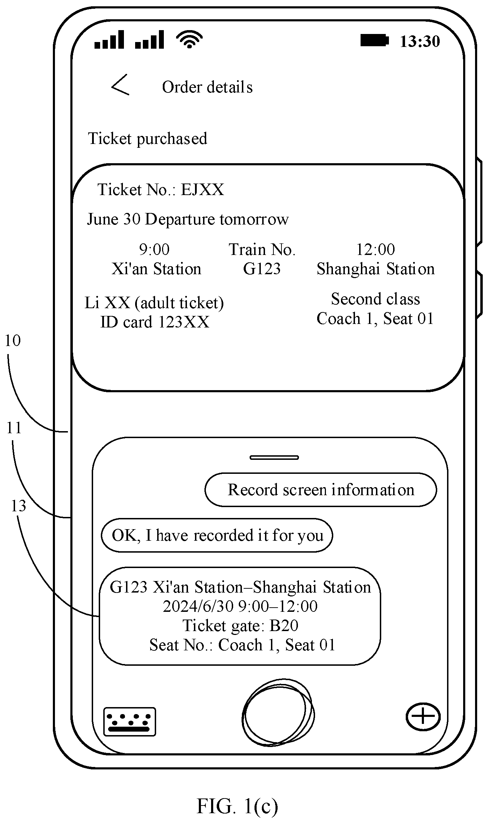

FIG. 1(a) to FIG. 1(d) are a diagram of user interfaces for actively obtaining memory information according to an embodiment of this application. As shown in FIG. 1(a), an interface 10 is a ticket order information interface, and the interface 10 is a current display interface of an application in an electronic device. The electronic device actively obtains memory information in the interface 10. If a user does not switch the display interface all along, the electronic device wakes up (or starts or invokes) Celia after obtaining the memory information. As shown in FIG. 1(b), after Celia is woken up, a window 11 of Celia is displayed in the interface 10 in a floating manner. Prompt information 12 is displayed in the window 11, and the prompt information 12 is used to prompt the user that the electronic device has obtained the memory information. If the user expects to save the memory information obtained from the interface 10, in one manner, the user may input, in the window 11 by using a voice or a text, an instruction that is the same as or basically the same as the prompt information. For example, the user may deliver, based on the prompt information 12, a voice instruction like "Record screen information", "Help me record screen information", "Note down screen information", or "Record ticket information on the picture". In another manner, the user may tap the prompt information 12, and in response to an operation of tapping the prompt information 12 by the user, the electronic device simulates the user to deliver an instruction "Record screen information". As shown in FIG. 1(c), the user inputs the instruction "Record screen information" by using a voice or a text, or taps the prompt information 12. In this case, the electronic device executes the instruction "Record screen information", and displays an execution result, that is, displays "OK, I have recorded it for you" and a widget 13. Content in the widget 13 is the memory information obtained based on display content in the interface 10. For example, the electronic device may alternatively broadcast "OK, I have recorded it for you" and/or content in the widget 13 by using a voice. It should be noted that, similarly to this, for any accompanying drawing or embodiment described below, content in a dialog box and/or content in a widget that is displayed in Celia may also be broadcast by using a voice. Details are not described below again.

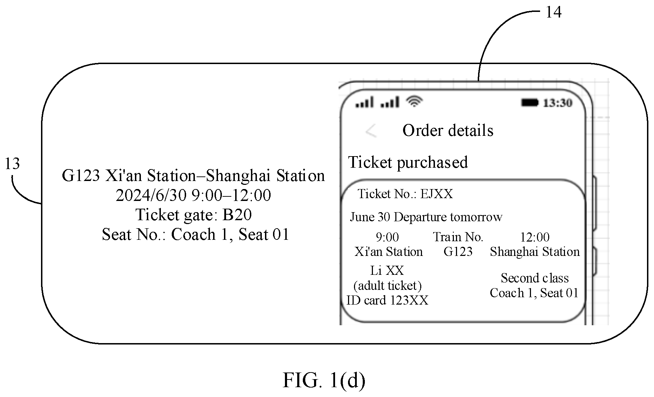

In an example, the widget 13 may alternatively be FIG. 1(d). As shown in FIG. 1(d), the widget 13 may further include a picture 14. The picture 14 is a partial screenshot of the interface 10, and indicates that information such as time and a place in the widget 13 comes from the interface 10.

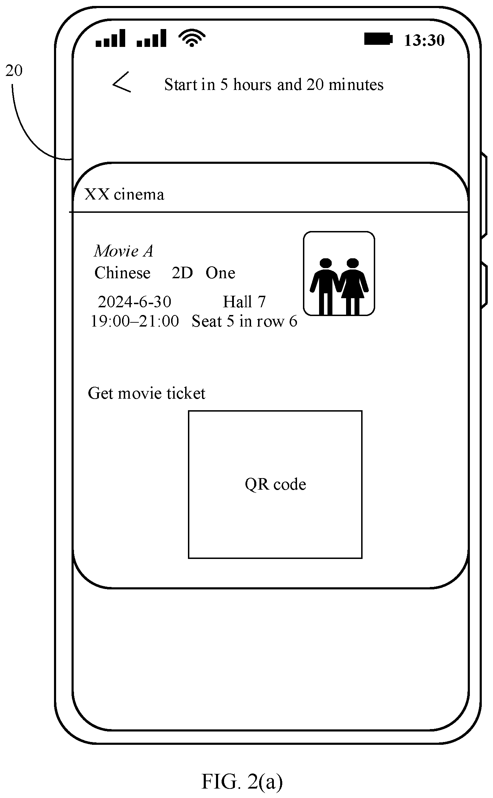

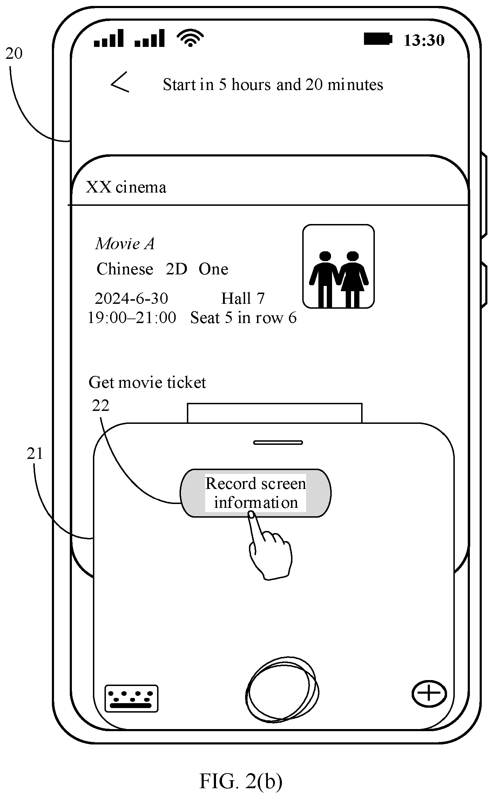

FIG. 2(a) to FIG. 2(d) are a diagram of other user interfaces for actively obtaining memory information according to an embodiment of this application. As shown in FIG. 2(a), an interface 20 is a movie ticket order information interface, and the interface 20 is a current display interface of an electronic device. The electronic device actively obtains memory information in the interface 20. If a user does not switch the interface all along, the electronic device wakes up Celia after obtaining the memory information. As shown in FIG. 2(b), after Celia is woken up, a window 21 of Celia is displayed in the interface 20 in a floating manner. Prompt information 22 may be displayed in the window 21, and the prompt information 22 is the same as the prompt information 12 in FIG. 1(a) to FIG. 1(d). For example, the user taps the prompt information 22. In response to an operation of tapping the prompt information 22 by the user, the electronic device simulates the user to deliver and execute the instruction "Record screen information", and displays "OK, I have recorded it for you" and a widget 23. Content in the widget 23 is the memory information obtained based on display content in the interface 20.

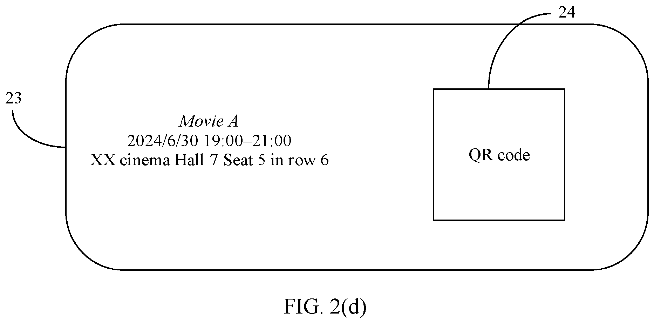

In an example, the widget 23 may alternatively be FIG. 2(d). As shown in FIG. 2(d), the widget 23 may further include a picture 24. The picture 24 is movie ticket obtaining QR code in the interface 20.

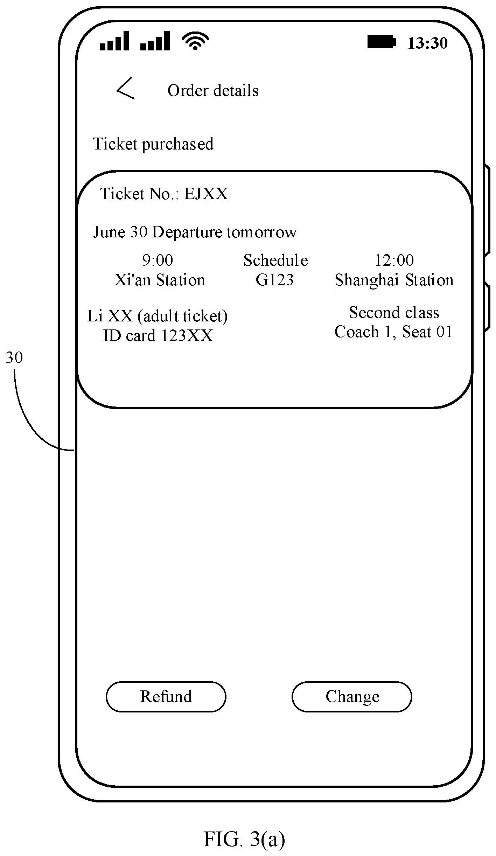

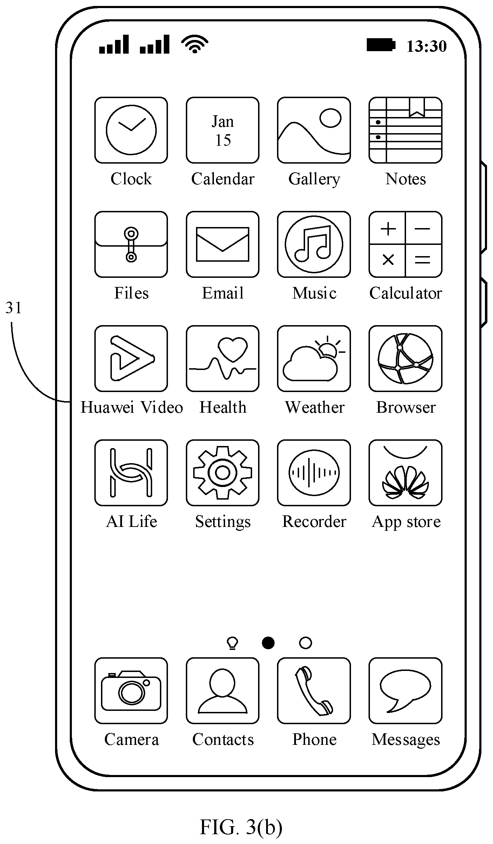

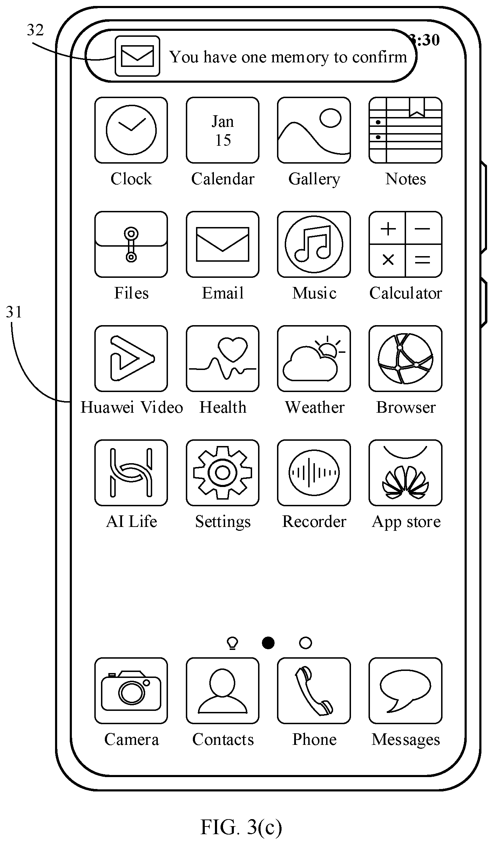

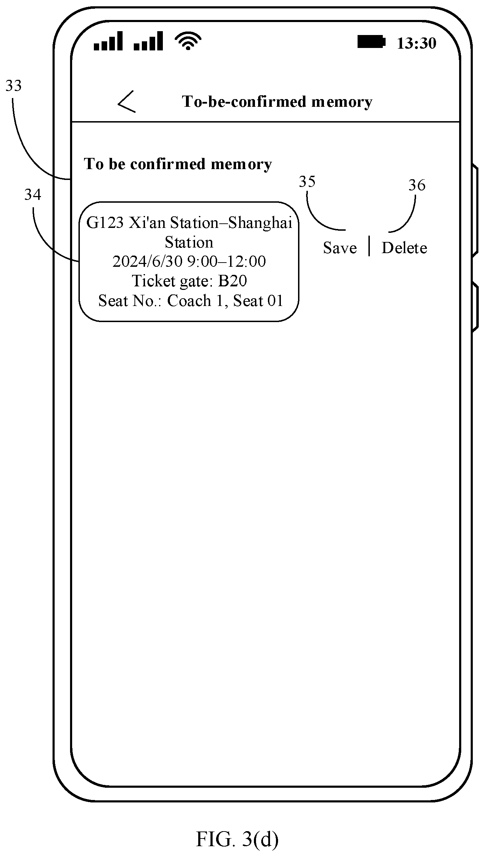

FIG. 3(a) to FIG. 3(d) are a diagram of other user interfaces for actively obtaining memory information according to an embodiment of this application. As shown in FIG. 3(a), an interface 30 is a current display interface of an electronic device. The electronic device actively obtains memory information in the interface 30. If a user switches the interface of the electronic device from the interface 30 to an interface 31 shown in FIG. 3(b) before the electronic device obtains the memory information in the interface 30, as shown in FIG. 3(c), the electronic device displays a pushed notification 32 in the interface 31, where the notification 32 is used to notify the user that there is to-be-confirmed memory information currently. As shown in FIG. 3(d), the user may enter an interface 33 by tapping the notification 32 or through a related path of an application corresponding to the notification 32. The interface 33 is an interface of the to-be-confirmed memory information. The interface 33 includes the to-be-confirmed memory information, namely, a widget 34, and a control 35 and a control 36 that are used by the user to save and delete the to-be-confirmed memory information. For example, the user taps the control 35, and in response to an operation of tapping the control 35 by the user, the electronic device saves the widget 34. Alternatively, the user taps the control 36, and in response to an operation of tapping the control 36 by the user, the electronic device deletes the widget 34. It should be understood that the interface 30 is the same as the interface 10 shown in FIG. 1(a) to FIG. 1(d), and the widget 34 is the same as the widget 13 shown in FIG. 1(a) to FIG. 1(d).

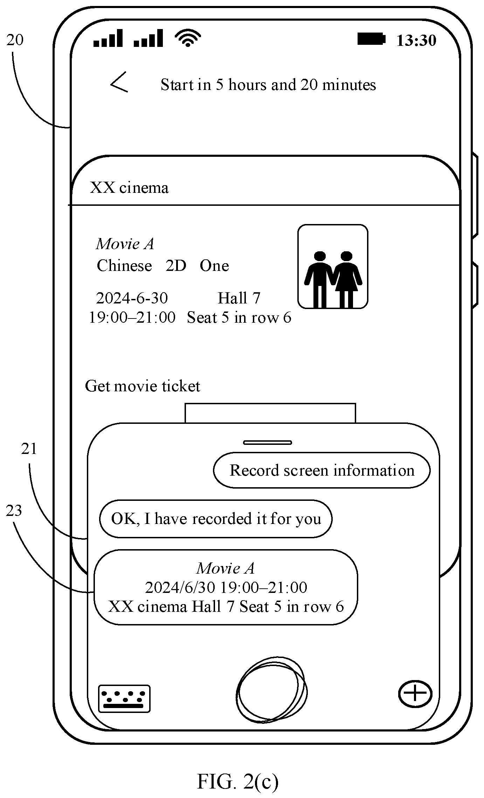

It should be noted that the interface 33 may include one or more pieces of to-be-confirmed memory information. For example, after the electronic device displays the notification 32, the user does not enter the interface 33, but browses the interface 20 shown in FIG. 2(a) to FIG. 2(d). In addition, the electronic device obtains the memory information in the interface 20. Before the electronic device obtains the memory information, the user switches the interface of the electronic device from the interface 20 to another interface, for example, the interface 31 shown in FIG. 3(b). In this case, there are two pieces of to-be-confirmed memory information, and the interface 33 includes the to-be-confirmed widget 23 (as shown in FIG. 2(c) or FIG. 2(d)) and the to-be-confirmed widget 34. Similarly, the user may save or delete the widget 23 by using a "Save" control and a "Delete" control corresponding to the widget 23.

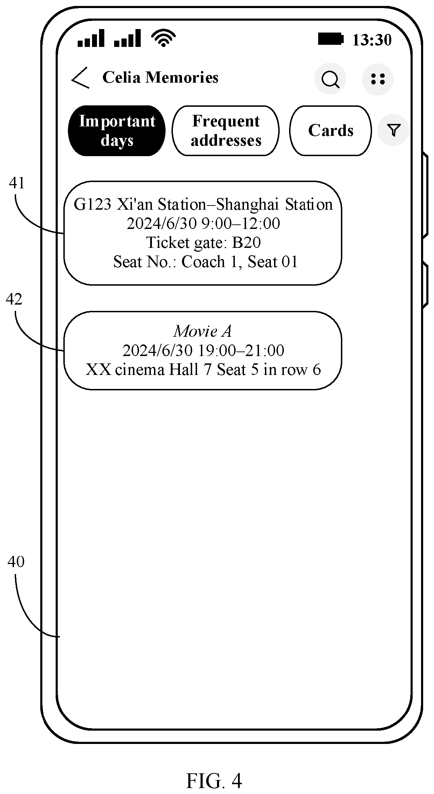

FIG. 4 is a diagram of a memory information management interface according to an embodiment of this application. As shown in FIG. 4, an interface 40 is the memory information management interface, and the interface 40 may include at least one widget. Content in the at least one widget is memory information obtained by the electronic device. For example, the at least one widget is a widget 41 and a widget 42. The widget 41 may be the widget 13 shown in FIG. 1(a) to FIG. 1(d). In the example shown in FIG. 1(a) to FIG. 1(d), when the electronic device displays the widget 13 in the window 11, the widget 13 may be saved in the interface 40. Alternatively, the widget 41 may be the widget 34 shown in FIG. 3(a) to FIG. 3(d). In the example shown in FIG. 3(a) to FIG. 3(d), after the user taps the control 35, the widget 34 may be saved in the interface 40. The widget 42 may be the widget 23 shown in FIG. 2(a) to FIG. 2(d). In the example shown in FIG. 2(a) to FIG. 2(d), when the electronic device displays the widget 23 in the window 21, the widget 23 may be saved in the interface 40.

"Important days", "Frequent addresses", and "Cards" shown in FIG. 4 are memory type tags. In an example, the user may view memory information of different memory types by sliding the memory type tags leftward or rightward. In an example, the widget 41 and the widget 42 may be memory information whose memory types are "Important days". It should be understood that the widget 41 and the widget 42 may alternatively be memory information of another memory type (for example, "Orders"). The memory type is described in detail below, and is not described herein.

It should be understood that FIG. 4 is merely described by using an example in which the interface 40 currently saves the widget 41 and the widget 42. It should be understood that if the electronic device further saves other memory information, the other memory information is also saved in the interface 40. The user may view all widgets by performing an operation of sliding up or down on a screen.

In an example, the interface 40 and the interface 33 shown in FIG. 3(d) are different pages in Celia, and the interface 40 and the interface 33 may be switched to each other.

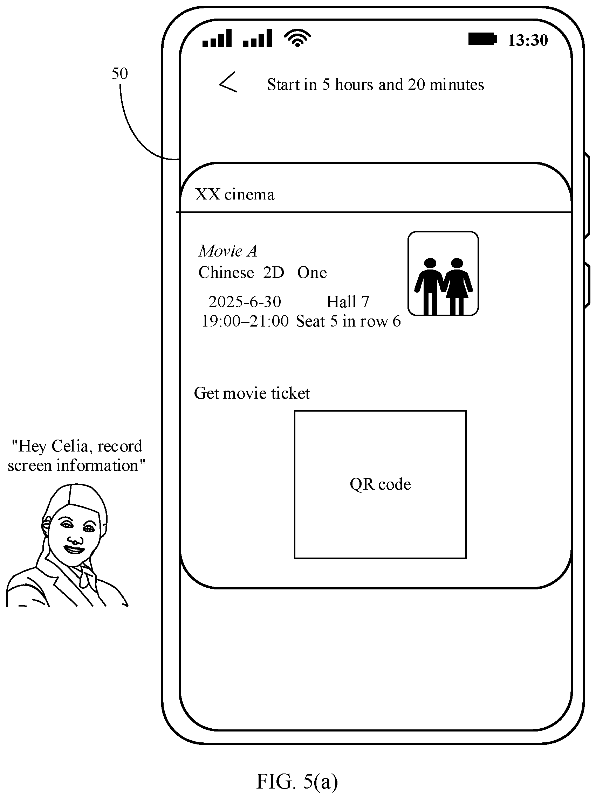

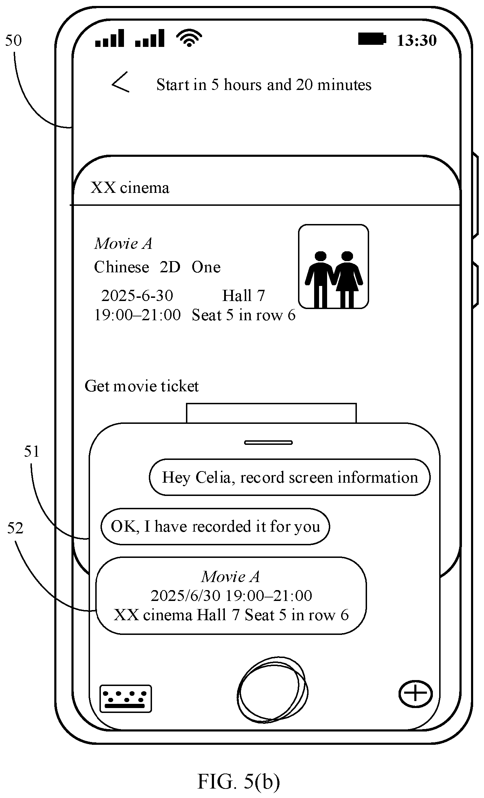

FIG. 5(a) and FIG. 5(b) are a diagram of user interfaces for obtaining memory information based on display content in a display interface of an application under triggering of a user (that is, passively) according to an embodiment of this application. As shown in FIG. 5(a), an interface 50 is a movie ticket order information interface, and the interface 50 is a current display interface of an electronic device. When a user expects to obtain memory information in the interface 50, the user may wake up Celia. For example, the user may wake up Celia by using a voice input "Hey Celia, record screen information". As shown in FIG. 5(b), after Celia is woken up by the user, a window 51 of Celia is displayed in the interface 50 in a floating manner. Celia executes the instruction "Record screen information" of the user, and after obtaining the memory information in the interface 50, displays "OK, I have recorded it for you" and a widget 52. Content in the widget 52 is the memory information obtained based on display content in the interface 50. It should be understood that the interface 50 is the same as the interface 20 shown in FIG. 2(a) to FIG. 2(d), and the widget 52 is the same as the widget 23 shown in FIG. 2(a) to FIG. 2(d).

In an example, the widget 42 shown in FIG. 4 may be the widget 52. When the electronic device displays the widget 52 in the window 51, the widget 52 may be saved in the interface 40 shown in FIG. 4.

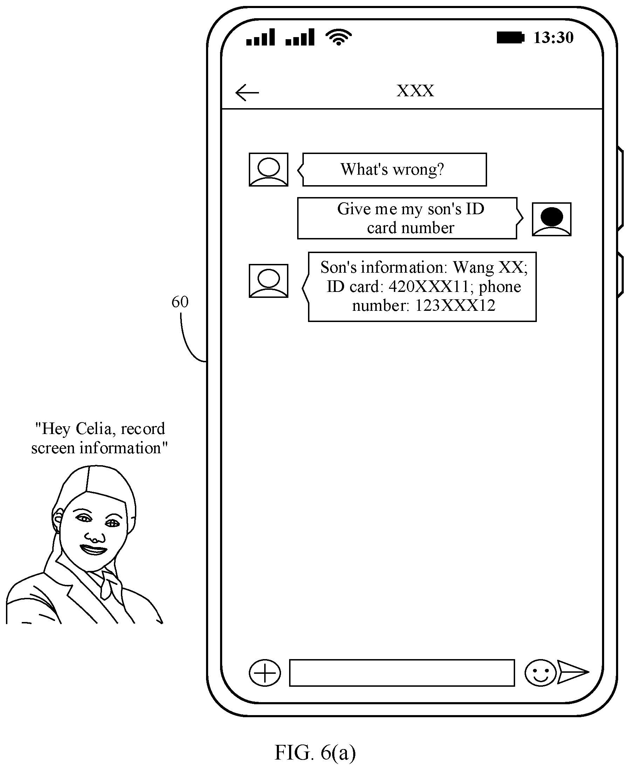

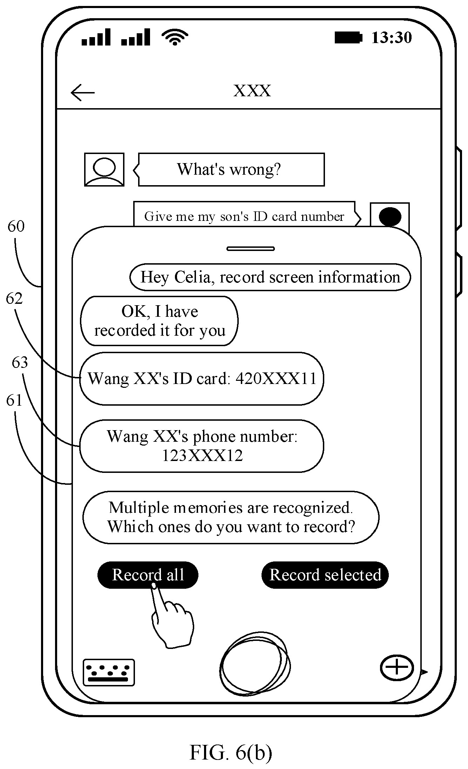

FIG. 6(a) to FIG. 6(c) are a diagram of other user interfaces for obtaining memory information by an electronic device based on display content in a display interface of an application under triggering of a user according to an embodiment of this application. As shown in FIG. 6(a), an interface 60 is a chat interface, and the interface 60 is a current display interface of the electronic device. When a user expects to obtain memory information in the interface 60, the user may wake up Celia. For example, the user may wake up Celia by using a voice input "Hey Celia, record screen information". As shown in FIG. 6(b), after Celia is woken up, a window 61 of Celia is displayed in the interface 60 in a floating manner. Celia executes the instruction "Record screen information" of the user, and after obtaining the memory information in the interface 60, displays "OK, I have recorded it for you", a widget 62, and a widget 63. Content in the widget 62 and the widget 63 is the memory information that is in the interface 60 and that is obtained by the electronic device.

In an example, the widget 62 and the widget 63 may alternatively be saved in the interface 40 shown in FIG. 4.

In another example, if the electronic device obtains a plurality of pieces of memory information, the electronic device may further support the user in selectively saving memory information.

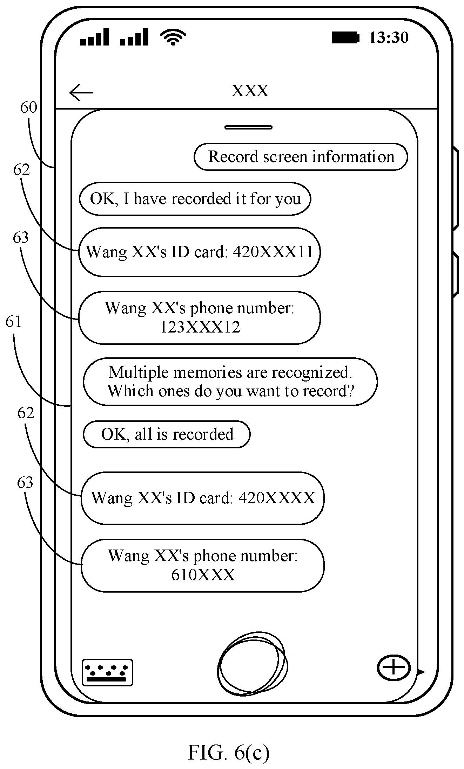

For example, as shown in FIG. 6(b), Celia may ask the user "A plurality of pieces of memory information are recognized. Which ones do you want to record?", and display a "Record all" control and a "Record selected" control. If the user expects to save all the memory information, the user may tap the "Record all" control. As shown in FIG. 6(c), in response to an operation of tapping the "Record all" control by the user, the electronic device may display "OK, all is recorded" and display the widget 62 and the widget 63 again, to indicate that the widget 62 and the widget 63 are saved. Further, in this case, the widget 62 and the widget 63 may be displayed in the interface 40 shown in FIG. 4. If the user expects to save only one piece of memory information, the user may tap the memory information to be saved, for example, tap the widget 62, and then tap the "Record selected" control. In response to an operation of tapping the "Record selected" control by the user, the electronic device may display "OK, the selected one is recorded" and display the widget 62 again, to indicate that the widget 62 is saved. Further, in this case, the widget 62 may be displayed in the interface 40 shown in FIG. 4. In addition, the user may alternatively indicate, by using a voice or a text, the electronic device to save the widget 62 and/or the widget 63. For example, if the user inputs "Record all" by using a voice, the electronic device saves the widget 62 and the widget 63. For example, if the user inputs "Record the first piece of memory information" by using a voice, the electronic device saves the widget 62.

In some embodiments, if Celia is woken up only in the current display interface, and Celia is not instructed to obtain memory information in the current display interface, Celia may alternatively automatically obtain the memory information in the current display interface, and display prompt information in a window of Celia after obtaining the memory information, to notify the user that the electronic device has obtained the memory information. For example, the prompt information may be the prompt information 12 in FIG. 1(a) to FIG. 1(d). Then, for interaction between the user and the electronic device, refer to the descriptions of FIG. 1(a) to FIG. 1(d) or FIG. 2(a) to FIG. 2(d).

### Scenario 2: Obtain memory information based on a circle-selected image.

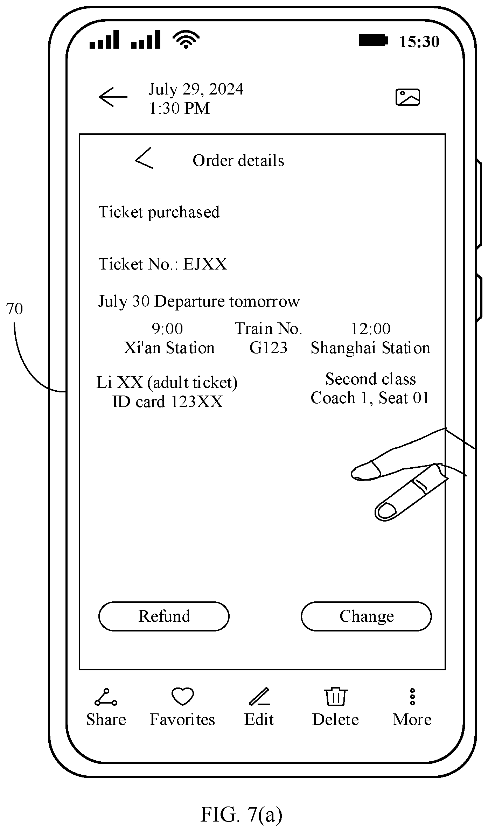

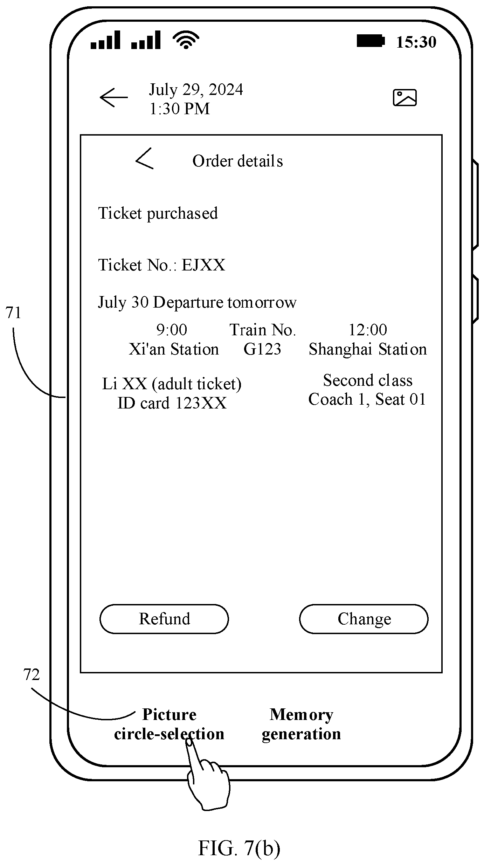

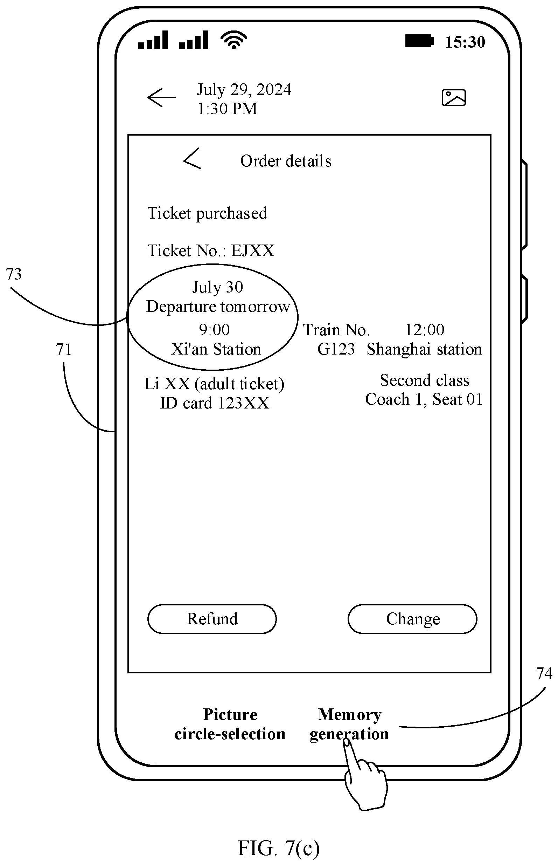

FIG. 7(a) to FIG. 7(d) are a diagram of user interfaces for obtaining memory information based on a circle-selection operation of a user according to this application. As shown in FIG. 7(a), an interface 70 is a current display interface of an electronic device, and the interface 70 may be a picture in a gallery or an application interface. The user may start AI Touch by pressing a screen with two fingers or in another triggering manner. AI Touch is performed in the interface 70, and the interface 70 changes to an interface 71 shown in FIG. 7(b). As shown in FIG. 7(b), the user taps a "Picture circle-selection" control 72, and then circle-selects content on the screen. For example, as shown in FIG. 7(c), the electronic device draws a corresponding line 73 based on the circle-selection operation of the user, where an area enclosed by the line 73 is a circle-selection area. The electronic device may obtain the memory information based on content in the circle-selection area.

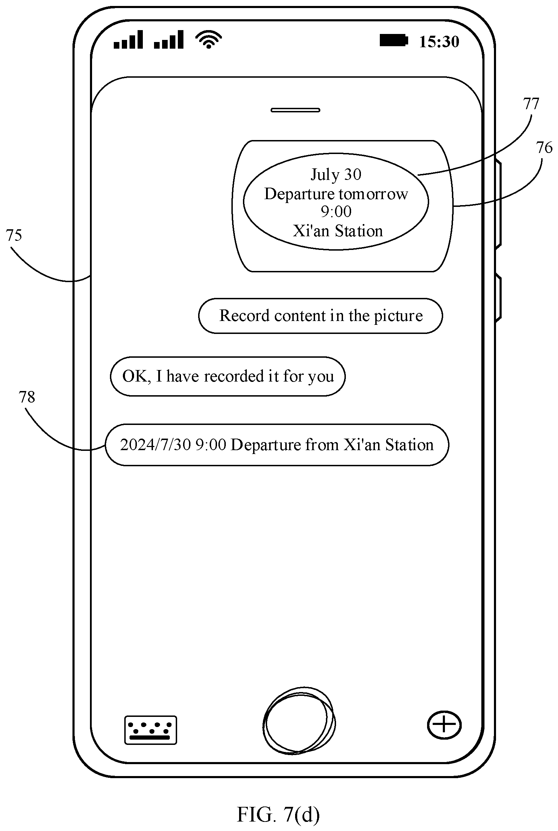

For example, in an example, the user taps a "memory generation" control 74, and in response to an operation of tapping the control 74 by the user, the electronic device wakes up Celia. As shown in FIG. 7(d), after waking up Celia, the electronic device displays a window 75 of Celia. For example, the window 75 may be displayed in an interface 71 in a floating manner. A dialog box 76 of the user is displayed in the window 75, and the electronic device simulates the user to deliver an instruction "Record content in the picture". A picture 77 in the dialog box 76 is an image corresponding to the circle-selection area in the interface 71. The electronic device executes the instruction "Record content in the picture", obtains the memory information based on the picture 77, and then displays an execution result "OK, I have recorded it for you" and a widget 78. Content in the widget 78 is the memory information obtained based on the picture 77.

In another example, the user taps a "Memory generation" control 74, and in response to an operation of tapping the control 74 by the user, the electronic device may obtain the memory information based on content in the circle-selection area. After obtaining the memory information, the electronic device may notify the user in the interface 71 that there is to-be-confirmed memory information currently. For example, the electronic device may prompt the user by using a push notification. The user may save the memory information based on the prompt. For example, the notification is similar to the notification 32 shown in FIG. 3(c), and the user may save the memory information in an interface similar to that shown in FIG. 3(d).

### Scenario 3: Obtain memory information based on a text.

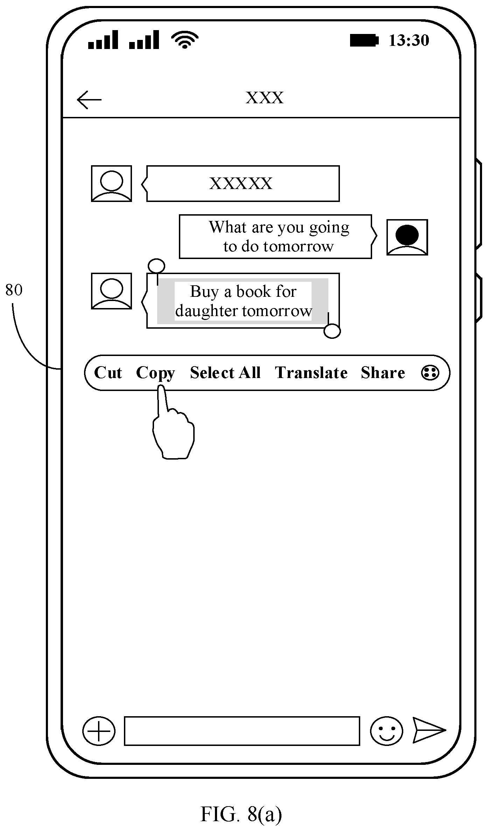

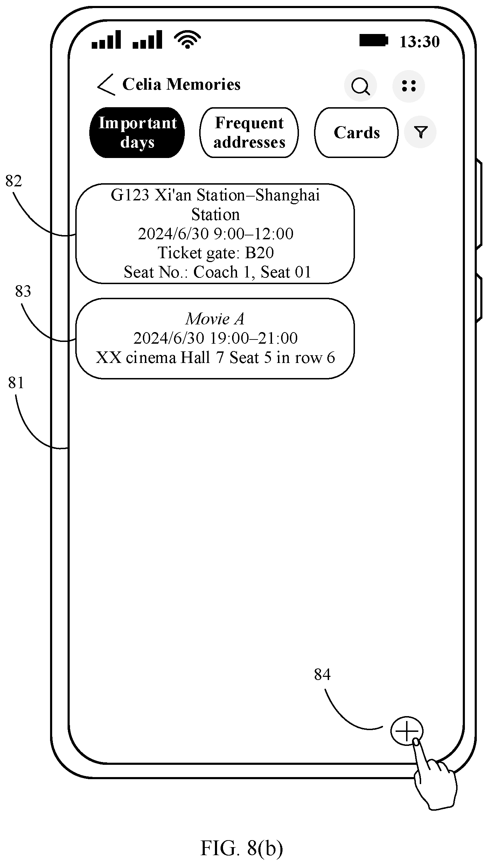

FIG. 8(a) to FIG. 8(d) are a diagram of interfaces for adding memory information by using a text according to this application. As shown in FIG. 8(b), based on the interface 40 shown in FIG. 4, a control 84 for adding memory information is added to an interface 81. A widget 82 and a widget 83 in the interface 81 may be respectively the widget 41 and the widget 42 in the interface 41.

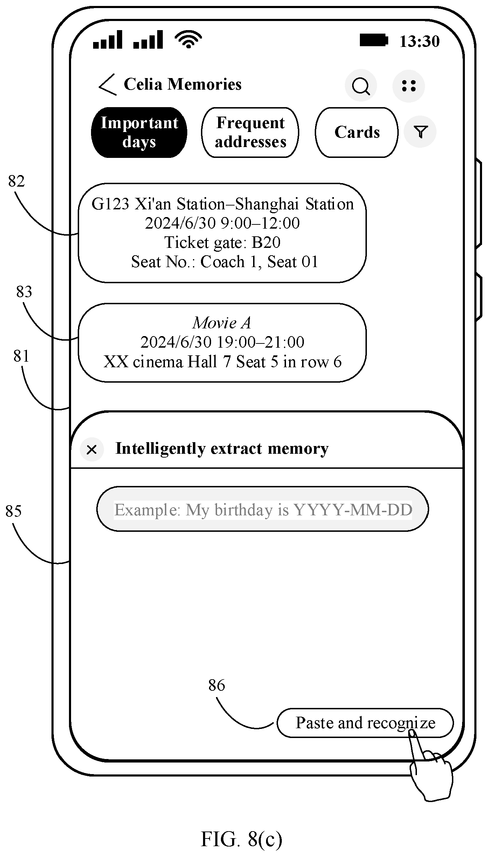

As shown in FIG. 8(a), a user copies information "Buy a book for daughter tomorrow" in the interface 80 to a clipboard. As shown in FIG. 8(b), the user enters the interface 81, and taps the control 84 in the interface 81. In response to an operation of tapping the control 84 by the user, as shown in FIG. 8(c), a window 85 is displayed in the interface 81, and the window 85 is a window for intelligently extracting memory. The user may trigger, by tapping a control 86 in the window 85, an electronic device to automatically paste a text "Buy a book for daughter tomorrow" copied by the user to the clipboard.

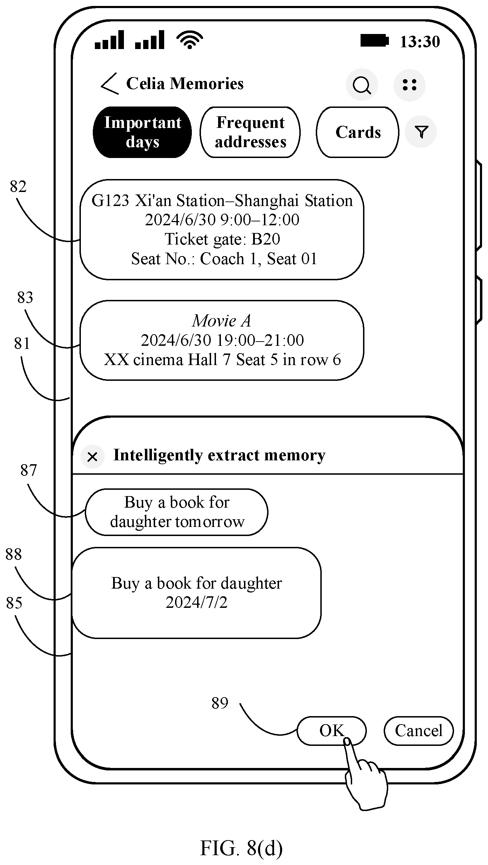

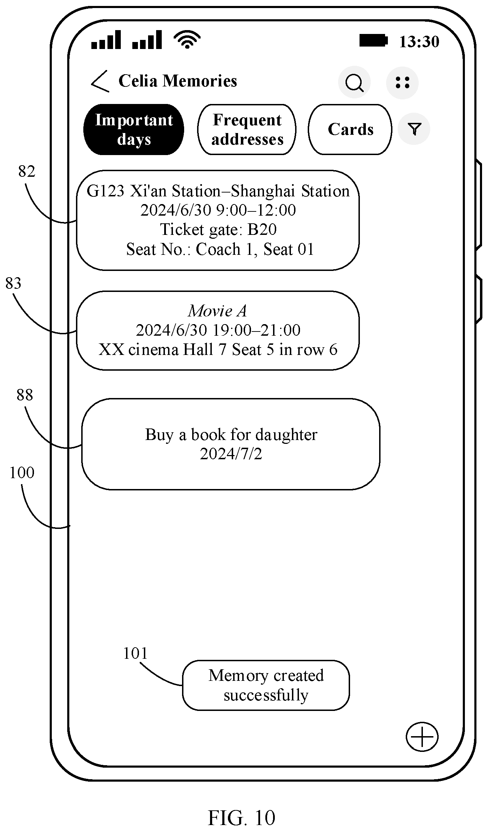

In an example, an operation of tapping the control 86 by the user may be further used to trigger the electronic device to obtain the memory information based on "Buy a book for daughter tomorrow". For example, in response to the operation of tapping the control 86 by the user, as shown in FIG. 8(d), a dialog box 87 and a widget 88 are displayed in the window 85. Content in the dialog box 87 is the text "Buy a book for daughter tomorrow" copied by the user to the clipboard, and the widget 88 is the memory information obtained based on the text "Buy a book for daughter tomorrow". If the user expects to save the memory information, the user taps a control 89 in the window 85. In response to an operation of tapping the control 89 by the user, the electronic device saves the widget 88. For example, in response to the operation of tapping the control 89 by the user, the window 85 is no longer displayed, and the interface 80 changes to an interface 100 shown in FIG. 10. That is, the electronic device saves the widget 88 in a memory information management interface. Optionally, the interface 100 may further include a prompt box 101. Information "New memory information created successfully" in the prompt box 101 is used to remind the user that the memory information is successfully added.

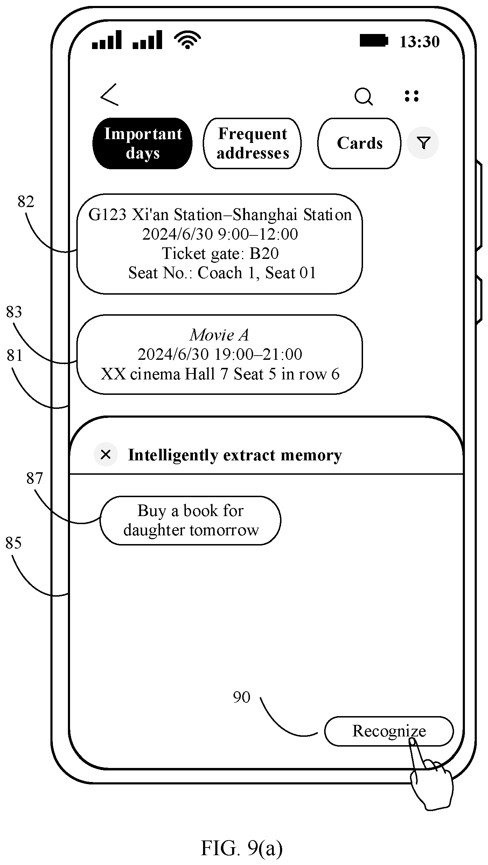

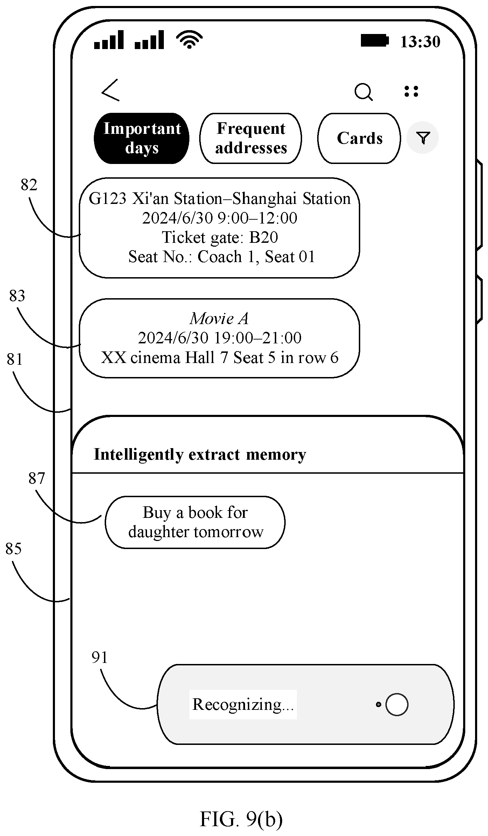

In another example, after automatically pasting the text "Buy a book for daughter tomorrow", the electronic device may obtain the memory information based on the text "Buy a book for daughter tomorrow" under triggering of the user. For example, in response to the operation of tapping the control 86 in the window 85 by the user, as shown in FIG. 9(a), the dialog box 87 and a control 90 for recognizing content are displayed in the window 85. After the user taps the control 90 for recognizing content, the electronic device obtains memory information based on the content in the dialog box 87, and displays prompt information 91 shown in FIG. 9(b). In a design, after obtaining the memory information, the electronic device no longer displays the prompt information 91, and displays the widget 88 in the window 85. In other words, after the electronic device obtains the memory information, content displayed in the window 85 is shown in FIG. 8(d). Same as the foregoing example, if the user expects to save the memory information, the user taps the control 89, and in response to an operation of tapping the control 89 by the user, the electronic device saves the widget 88. In another design, after obtaining the memory information, the electronic device no longer displays the window 85, but displays the interface 100 shown in FIG. 10.

### Scenario 4: Obtain memory information based on a picture.

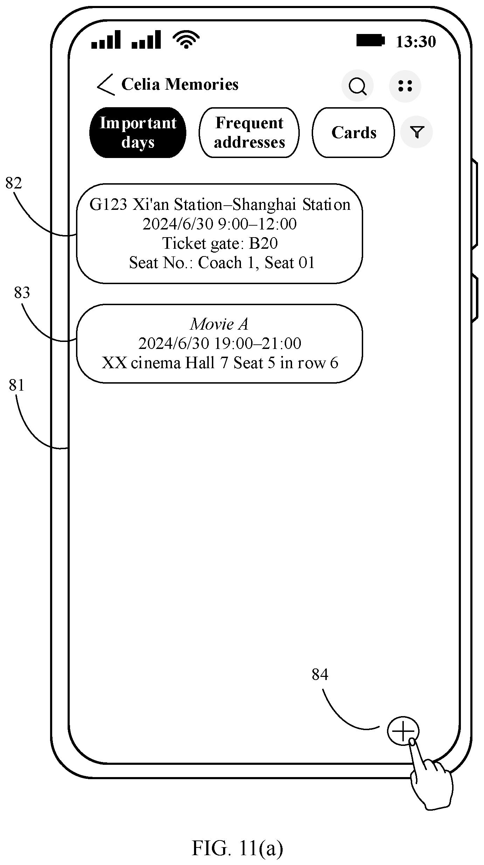

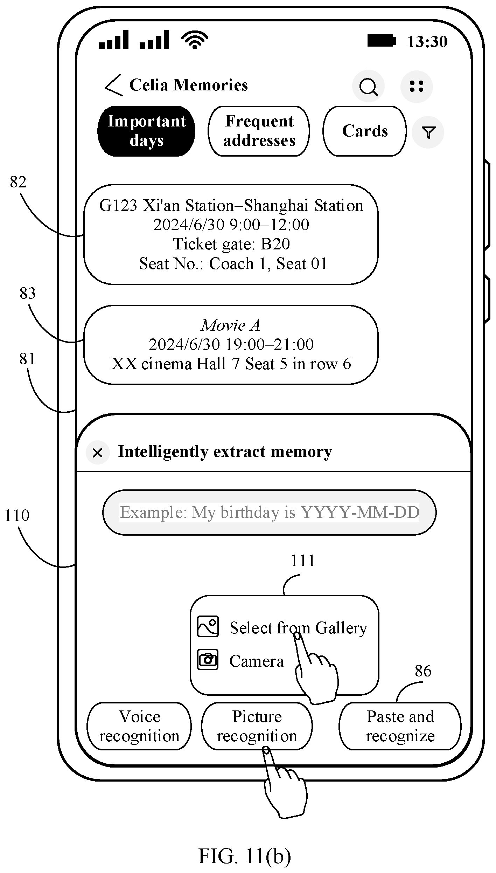

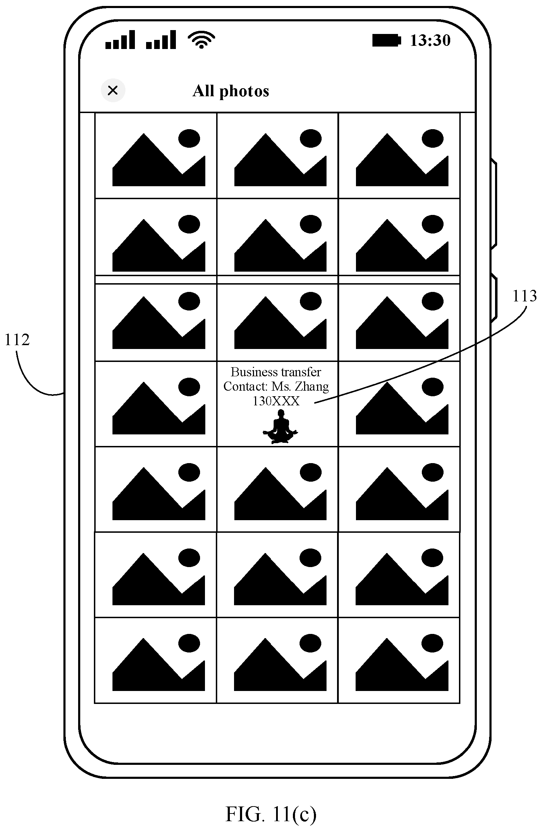

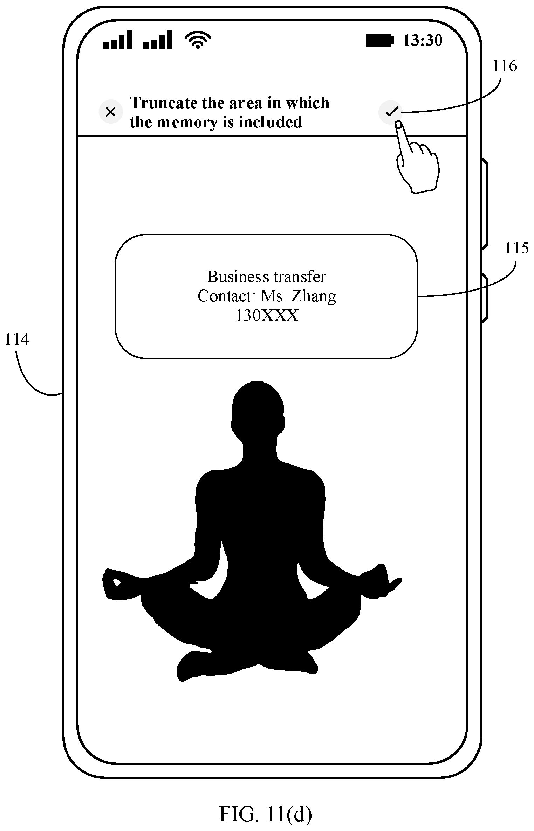

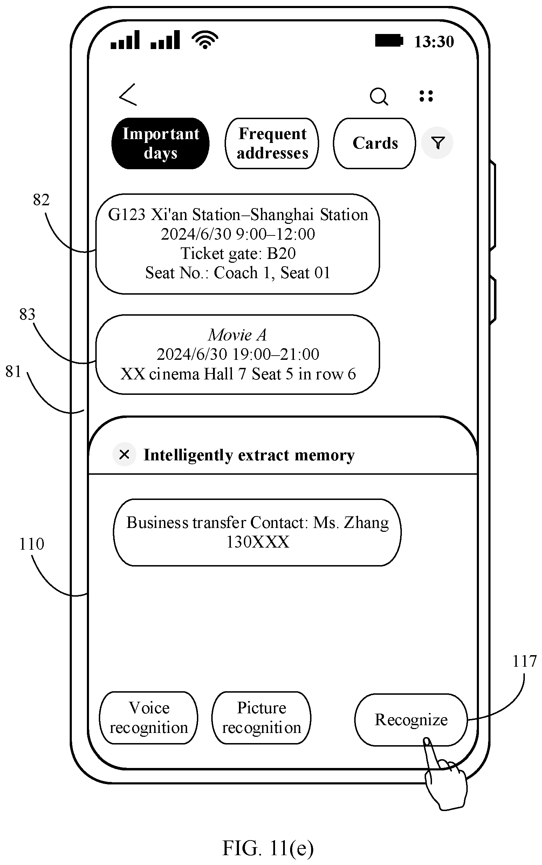

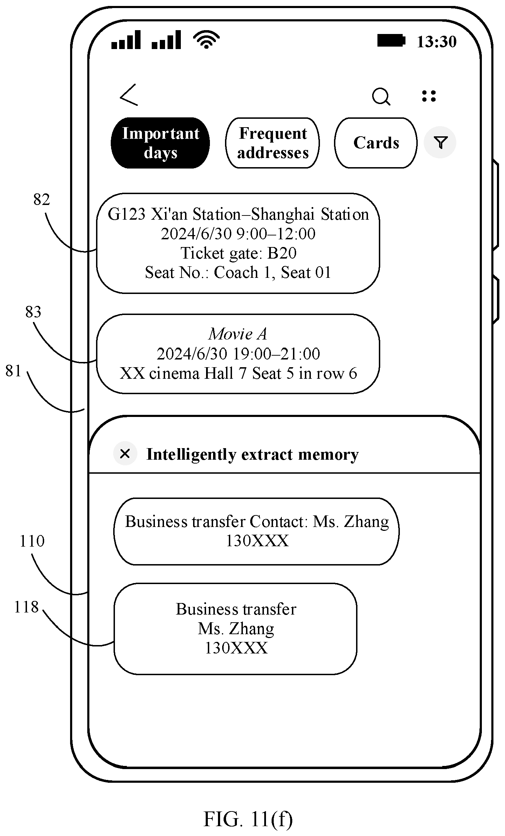

FIG. 11(a) to FIG. 11(e) are a diagram of interfaces for adding memory information by using a text in a picture according to this application. As shown in FIG. 11(a), for an interface 81, refer to the foregoing descriptions of FIG. 8(b). A user taps a control 84. In response to an operation of tapping a control 84 by the user, as shown in FIG. 11(b), a window 110 is displayed in the interface 81, and the window 110 is a window for intelligently extracting memory. Compared with the window 85 shown in FIG. 8(c), the window 110 further includes a "Voice recognition" control and a "Picture recognition" control. After the user taps the "Picture recognition" control, an option box 111 is displayed in the window 110, and the option box 111 includes two options: a "Select from Gallery" option and a "Camera" option. The user may select a picture from the gallery by using the "Select from Gallery" option. The user may take a picture by using the "Camera" option. For example, if the user taps the "Select from Gallery" option, an electronic device displays an interface 112 shown in FIG. 11(c). The user may select a picture from the interface 112 for obtaining the memory information. For example, after the user selects a picture 113 in the interface 112, the electronic device displays an interface 114 shown in FIG. 11(d), and the electronic device recognizes the picture in the interface 114 to obtain information in the picture. The information in the picture is content in a recognition box 115. In response to an operation of tapping a control 116 in the interface 114 by the user, as shown in FIG. 11(e), the electronic device obtains the information in the picture shown in FIG. 11(d), that is, "Business transfer Contact: Ms. Zhang 130XXX". The window 110 further includes a control 117. The user may tap the control 117. In response to an operation of tapping the control 117 by the user, the electronic device obtains the memory information based on "Business transfer Contact: Ms. Zhang 130XXX", to obtain a widget 118 shown in FIG. 11(f).

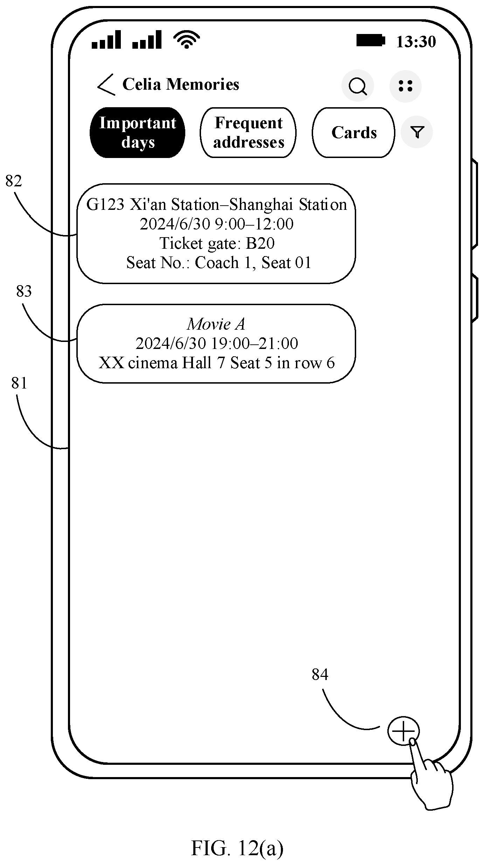

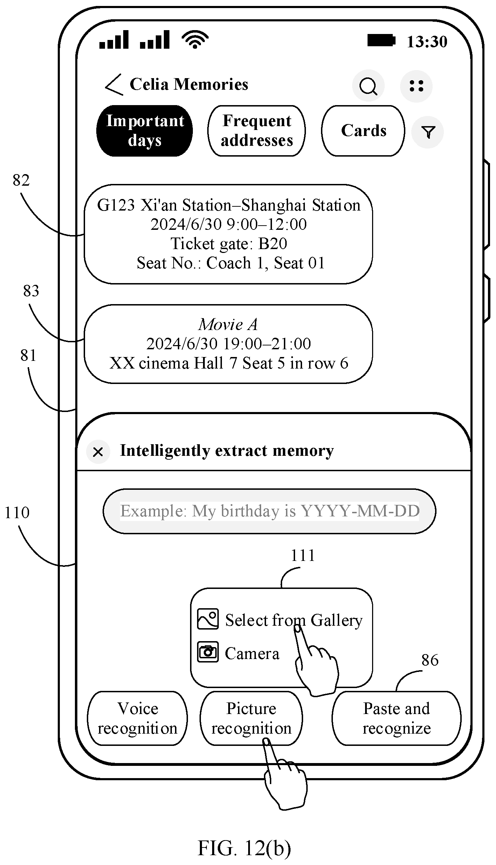

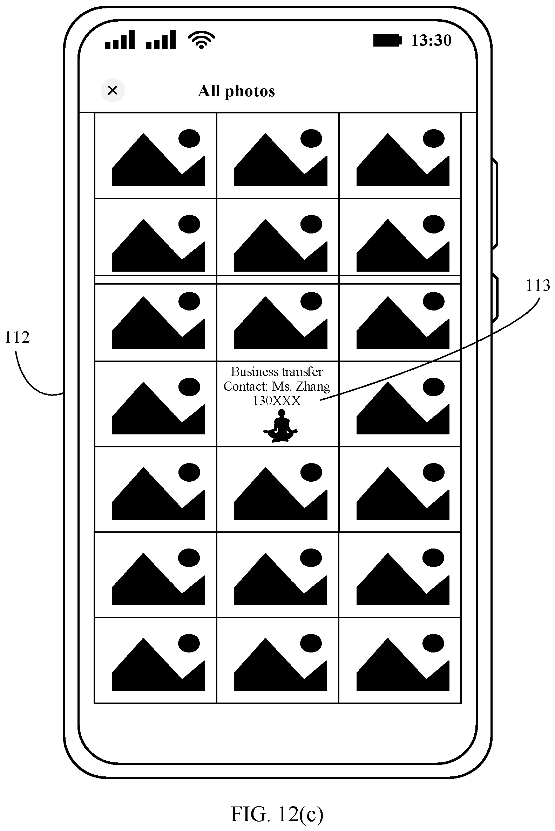

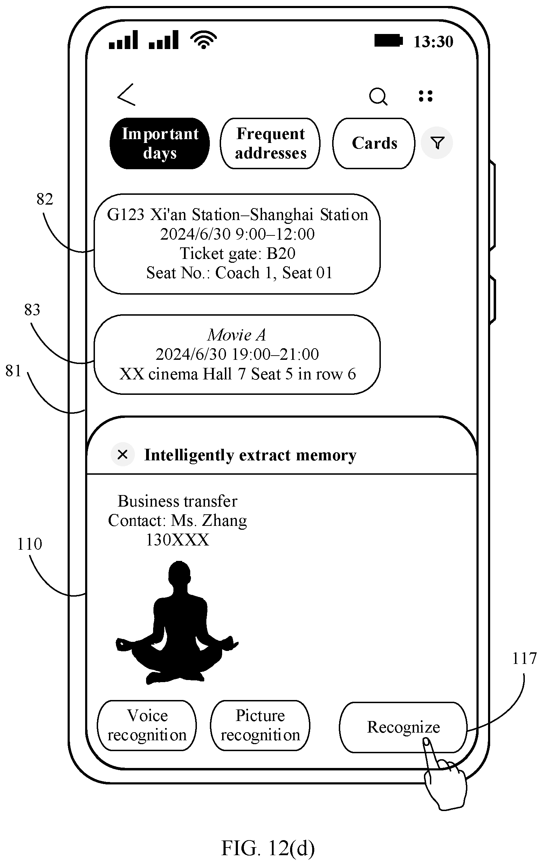

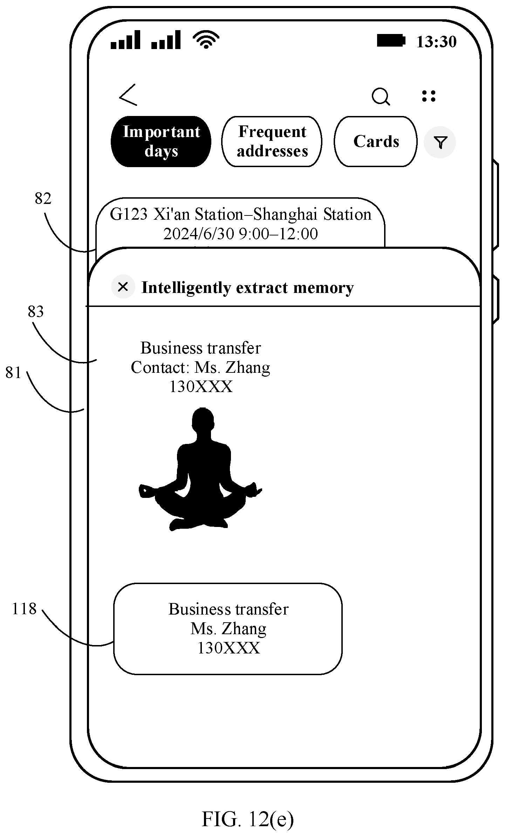

FIG. 12(a) to FIG. 12(e) are a diagram of interfaces for adding memory information by using a picture according to this application. FIG. 12(a) to FIG. 12(c) are the same as FIG. 11(a) to FIG. 11(c). For details, refer to the foregoing descriptions of FIG. 11(a) to FIG. 11(e). After a user selects a picture 113 in an interface 112, a display interface jumps to an interface 81, and the picture 113 is displayed in a window 110 in the interface 81. In response to an operation of tapping a control 117 in the window 110 by the user, as shown in FIG. 12(d), an electronic device obtains the memory information based on the picture 113, to obtain a widget 118 shown in FIG. 12(e).

It can be learned that, different from the example shown in FIG. 11(d), in the example shown in FIG. 12(d), after the user taps a thumbnail of the picture 113, the electronic device does not display the interface 114 shown in FIG. 11(d), and does not recognize the picture 113, but directly displays the picture 113 in the window 110, and obtains the memory information based on the picture 113.

It should be understood that various operations, such as tapping or sliding, described in embodiments of this application are merely possible operation examples for implementing corresponding functions, and these operation examples shall not constitute any limitation on this application. Names, patterns, locations, and the like of controls in the user interface diagrams shown in embodiments of this application, and an arrangement of content in the user interface diagrams are examples. These examples shall not constitute any limitation on this application.

The following describes an information recording method provided in this application with reference to the user interfaces described above.

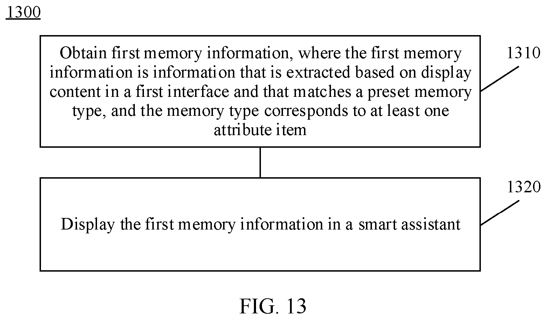

FIG. 13 is a schematic flowchart of an information recording method according to this application. The method 1300 may be applied to the electronic device described above. For example, the method may be performed by an agent in the electronic device. The method 1300 may include S1310 and S1320. The following describes steps in the method 1300.

S1310: Obtain first memory information.

The first memory information is information that is extracted based on display content in a first interface and that matches a preset memory type, and the memory type corresponds to at least one attribute item. For example, the display content in the first interface may be all content in the first interface, or may be a part of content in the first interface, for example, a text or a picture in the first interface.

In this embodiment of this application, at least one memory type (which may also be referred to as a category, a memory category, a recognition type, or the like) may be preset. For example, the memory type may be a type like "Important days", "Addresses", "Cards", "Orders", or "Transactions" (or referred to as "Events").

One memory type may include at least one attribute item. For example, attribute items of "Important days" may include attribute items such as a name, a related person, and time. Attribute items of "Transactions" may include time, a place, a name, a subject, and the like.

For example, some memory types may be further classified into a plurality of subtypes. When the subtypes are different, attribute items corresponding to the memory types may be different. For example, "Important days" may include one or more of the following subtypes: a birthday, an anniversary, a repayment day, an exam day, and a payday. For example, "Orders" may include one or more of the following subtypes: a train ticket order, an air ticket order, or a movie ticket order. For example, "Cards" may include one or more of the following subtypes: a business card, an identity card, or a driver's license.

For example, attribute items of a memory type whose subtype is a train ticket may include a train number, a departure station, a destination station, time, a ticket gate, a seat number, and the like. For example, refer to the widget 13 shown in FIG. 1(a) to FIG. 1(d). Content in the widget 13 is one piece of memory information, a memory type corresponding to the memory information is "Orders", and a subtype is a train ticket.

For example, attribute items of a memory type whose subtype is a driver's license may include a name, a number, a validity period, and the like.

For example, if the first interface is an application interface related to a map, a corresponding memory type may be "Transactions" or "Addresses", and the first memory information may include one or more of the following: time, an address, a person name, a card number, an event, or the like. The event is, for example, ride hailing or traveling. For example, if the first interface is an application interface related to music, a corresponding memory type may be "Important days" or "Transactions", and the first memory information may include one or more of the following: a song name, a singer, a song release time, or the like.

It should be understood that the memory types and the corresponding attribute items shown in this embodiment of this application are merely examples for description, and shall not constitute any limitation on this application.

In an implementation, matching may be performed between the display content in the first interface and a part or all of the at least one preset memory type. If the display content in the first interface successfully matches a specific memory type, matching information is used as the first memory information; or if the display content in the first interface successfully matches a plurality of memory types, matching information of a memory type corresponding to a largest quantity of pieces of matching information is used as the first memory information.

In another implementation, different interfaces or different content may correspond to one memory type by default. If the display content in the first interface successfully matches a default memory type corresponding to the display content in the first interface, matching information may be used as the first memory information.

In still another implementation, a user may autonomously select a memory type, and matching is performed between the display content in the first interface and the autonomously selected memory type. If the matching succeeds, matching information may be used as the first memory information.

It should be understood that the matching information is information that is of a corresponding attribute item and that is obtained through matching.

For example, the foregoing matching operation may be performed by using a large language model (large language model, LLM).

In some embodiments, the electronic device may perform corresponding processing based on the display content in the first interface, to obtain the first memory information. For example, the electronic device may perform matching between the display content in the first interface and the at least one preset memory type, to obtain the first memory information.

In some other embodiments, the electronic device may send, to a server, the display content in the first interface or a preprocessing result obtained by preprocessing the display content in the first interface, and the server may perform corresponding processing based on the display content in the first interface or the preprocessing result, to obtain the first memory information. In this case, S1310 may specifically include: receiving the first memory information from the server. For example, the server may perform matching between the display content in the first interface and the at least one preset memory type, to obtain the first memory information. For example, the preprocessing may be visual analysis, interface framework analysis, interface text recognition, and/or other processing. A corresponding preprocessing result may be an application page, a text, and/or image data with a description. The application page may be, for example, an application name and/or a page name.

S1320: Display the first memory information in a smart assistant.

For example, a first widget may be displayed in the smart assistant, and the first widget may include the first memory information. Alternatively, the first memory information may be displayed in another form, for example, in a form of picture.

According to the information recording method provided in this application, the electronic device may obtain the first memory information, and display the memory information in the smart assistant. According to the method, the user does not need to autonomously memorize a large amount of information, and may obtain required information at any time through the smart assistant based on a requirement. This can reduce operation complexity of information obtaining, thereby improving user experience.

In some embodiments, before S1320, the method may further include: obtaining a first user operation.

In a case, the first user operation is used to indicate to save the first memory information. In this case, the electronic device may perform S1320 in response to the first user operation.

In an example, before the first user operation is obtained, the method 1300 may further include: displaying prompt information. The prompt information indicates that there is to-be-saved memory information currently.

Specifically, after obtaining the first memory information, the electronic device may display the prompt information. The user may perform the first user operation based on the prompt information. In response to the first user operation, the electronic device may display the first memory information in the smart assistant.

According to this solution, the electronic device may actively obtain the first memory information, and after obtaining the first memory information, prompt, by using the prompt information, the user to save the memory information. The user may save the first memory information based on the prompt of the electronic device.

In another case, the first user operation indicates the display content. In this case, the electronic device may perform S1310 in response to the first user operation.

According to this solution, the electronic device may obtain the first memory information under triggering of the user.

For example, the display content is one of the following: interface content in the first interface of a first application, display content in a first area of the first interface, a first text in the first interface, and a first picture in the first interface.

The following describes in detail two cases in which the electronic device actively obtains the first memory information and passively (namely, under triggering of the user) obtains the first memory information.

### Actively obtain the first memory information.

In some embodiments, S1310 may specifically include: scanning a display interface of the first application; and obtaining the first memory information based on the display content in the currently scanned first interface, where the first interface is a display interface of the first application.

In other words, the electronic device may actively obtain the memory information based on a display interface of the application. For example, the electronic device may scan the display interface of the first application based on a preset period, or scan the display interface of the first application when the display interface of the first application is switched. It should be understood that for a same application, for example, the first application, interfaces scanned by the electronic device at different moments may be different. Memory information may be obtained based on some interfaces, and memory information may not be obtained based on some other interfaces. That the memory information may not be obtained means that no information matching a related memorized type exists in the interface.

According to the foregoing solution, the electronic device may actively obtain the first memory information without triggering of the user, thereby avoiding an operation step in which the user performs active triggering.

For example, for the currently scanned first interface, the application page, the text, and the image data with the description in the first interface may be extracted through visual analysis, interface framework analysis, interface text recognition, and/or the like. Then, the first memory information may be obtained based on the application page, the text, and the image data with the description in the first interface. For example, a memory type adapted to the first application may be determined based on the application page, the text, and the image data with the description in the first interface, then a corresponding schema (schema) is invoked to generate a prompt for obtaining the memory information, and the first memory information may be generated by invoking the LLM by using the prompt.

Optionally, the first application may be a target application. The target application may also be referred to as a memory source. The electronic device is capable of obtaining the memory information by scanning a display interface of the target application.

For example, the electronic device obtains memory information in a display interface of an application a plurality of times under triggering of the user. In this case, the electronic device may use the application as the target application, or the user may mark the application as the target application. For example, a quantity of times that the electronic device obtains memory information in a display interface of an application under triggering of the user is greater than a preset quantity of times (denoted as N times). In this case, the electronic device may remind, in a pop-up box in a current display interface, the user whether to mark the application as the target application. The user may mark the application as the target application based on the prompt.

In an example, S1320 may specifically include: if a display interface is not switched from the first interface, waking up the smart assistant, and displaying the first memory information in a dialog window of the smart assistant.

In other words, the electronic device obtains the first memory information based on the first interface. If the display interface of the electronic device still stays in the first interface when the first memory information is obtained, the electronic device may actively wake up the smart assistant, and display, in the smart assistant, the first memory information obtained based on the first interface.

For example, the smart assistant may be Celia, the first interface may be the interface 10 shown in FIG. 1(a) to FIG. 1(d), and the first memory information may be content in the widget 13 shown in FIG. 1(a) to FIG. 1(d). If the user keeps staying in the interface 10, after obtaining the memory information based on the interface 10, the electronic device wakes up Celia, displays the widget 13 in the window 11, and saves the widget 13 in Celia, for example, saves the widget 13 in the interface 40 shown in FIG. 4.

In another example, displaying the prompt information may specifically include: if a display interface is not switched from the first interface, displaying the prompt information in a dialog window of the smart assistant, where the dialog window of the smart assistant is displayed in the first interface in a floating manner.

Correspondingly, S1320 may specifically include: displaying the first memory information in the dialog window of the smart assistant in response to the first user operation performed on the dialog window of the smart assistant. To be specific, the electronic device obtains the first memory information based on the first interface, and if the display interface of the electronic device still stays in the first interface when the first memory information is obtained, the electronic device may actively wake up the smart assistant, and display first prompt information in the dialog window of the smart assistant. Then, the user may perform the first user operation in the dialog window of the smart assistant. In response to the first user operation, the electronic device may display the first memory information. For example, the user may input a first user instruction in the dialog window of the smart assistant. The first user instruction may be input by using a voice or a text. The electronic device executes the first user instruction, and displays the first memory information. Alternatively, the user may perform an operation on the prompt information, and the electronic device executes an instruction corresponding to the operation, to display the first memory information.

The foregoing solution can support the user in obtaining the memory information in a voice interaction scenario or a non-voice interaction scenario, and guide, by prompting the user by using the prompt information in a scenario in which the user does not switch the display interface, the user to save the memory information.

For example, the smart assistant may be Celia, the first interface may be the interface 10 shown in FIG. 1(a) to FIG. 1(d), and the first memory information may be content in the widget 13 shown in FIG. 1(a) to FIG. 1(d). If the user keeps staying in the interface 10, after obtaining the memory information based on content in the interface 10, the electronic device wakes up Celia, and displays prompt information 12 (an example of the prompt information). The user may input the first user instruction "Record screen information" or tap the prompt information 12. The electronic device displays the widget 13, and saves the widget 13 in Celia, for example, saves the widget 13 in the interface 40 shown in FIG. 4.

For example, the smart assistant may be Celia, the first interface may be the interface 20 shown in FIG. 2(a) to FIG. 2(d), and the first memory information may be the widget 23 shown in FIG. 2(a) to FIG. 2(d). If the user keeps staying in the interface 20, after obtaining the memory information based on content in the interface 20, the electronic device wakes up Celia, and displays prompt information 22 (an example of the prompt information). The user may input the first user instruction "Record screen information" or tap the prompt information 22. The electronic device displays the widget 23, and saves the widget 23 in Celia, for example, saves the widget 23 in the interface 40 shown in FIG. 4.

In still another example, displaying the prompt information may include: displaying the prompt information in a second interface if a display interface is switched from the first interface to the second interface.

Correspondingly, S1320 is specifically: displaying the first memory information in a third interface of the smart assistant in response to the first user operation performed on the prompt information, where the third interface includes the to-be-saved (or referred to as to-be-confirmed) memory information.

To be specific, the electronic device obtains the first memory information based on the first interface. If the display interface of the electronic device is not the first interface when the first memory information is obtained, for example, if the display interface is the second interface, the electronic device pushes the prompt information, to remind the user that there is the to-be-saved memory information currently. The user may view the to-be-saved memory information in the third interface of the smart assistant based on the prompt information. For example, the user may tap the prompt information. In response to an operation of tapping the prompt information by the user, the electronic device displays the third interface. Alternatively, the user may tap an APP icon corresponding to the prompt information. After starting the APP, the user may enter the third interface through a switch page.

The foregoing solution can guide, by prompting the user by pushing the prompt information in a scenario in which the user has switched the display interface, the user to save the memory information. In this way, the user can perceive in real time that the electronic device performs the operation of obtaining the memory information, and can save the obtained memory information at any time as required.

For example, the first interface may be the interface 30 shown in FIG. 3(a) to FIG. 3(d). The electronic device obtains the first memory information based on content in the interface 30. If the display interface of the electronic device is the interface 31 instead of the interface 30 when the first memory information is obtained, the electronic device displays the prompt information, namely, the notification 32, in the interface 31. The user may enter the third interface, for example, the interface 33, by tapping the notification 32, tapping a Celia icon, or in another manner. The user may view the to-be-saved memory information in the interface 33, namely, content in the widget 34.

Further, the third interface includes a confirmation control corresponding to the first memory information, and the method 1300 may further include: saving the first memory information in the smart assistant in response to an operation performed on the confirmation control.

For example, in the example shown in FIG. 3(a) to FIG. 3(d), the confirmation control is the control 35. The user may tap the control 35. In response to an operation of tapping the control 35, Celia saves the widget 34. For example, after Celia saves the widget 34, the user may view the widget 34 in the interface 40 shown in FIG. 4. The widget 41 in FIG. 4 is the widget 34.

### Passively obtain the first memory information, in other words, obtain the first memory information under triggering of the user.

For example, the electronic device may support a plurality of interaction manners such as a voice and a touch operation (for example, circle selection, line drawing, and text selection) to trigger the electronic device to obtain the memory information based on entire screen information or partial information on a screen, to satisfy a requirement of a user for obtaining the memory information in different scenarios.

A manner of passively obtaining the first memory information is described below by using examples based on different display content.

### Example 1: The display content is the interface content in the first interface of the first application.

In some embodiments, S1310 may specifically include: obtaining the first memory information based on the interface content in the first interface in response to the first user operation performed in a dialog window of the smart assistant. The dialog window of the smart assistant is displayed in the first interface in a floating manner, and the first interface is a display interface of the first application.

According to this solution, when the user has a memory requirement, the user may obtain the memory information by waking up Celia.

For example, the first application may be a non-target application. As described above, the electronic device is capable of obtaining the memory information by scanning a display interface of the target application. Correspondingly, for the non-target application, the electronic device can obtain the memory information under triggering of the user.

For example, the first user operation may be in a form of voice, text, or the like.

For example, the first interface may be the interface 50 shown in FIG. 5(a) and FIG. 5(b), the first memory information may be content in the widget 52 shown in FIG. 5(a) and FIG. 5(b), and the first user operation may be an instruction "Hey Celia, record screen information" that is input by the user by using a voice and that is shown in FIG. 5(a) and FIG. 5(b).

### Example 2: The display content is the content in the first area of the first interface.

In some embodiments, before S1310, the method may further include: determining the first area in response to the first user operation performed by the user in the first interface.

For example, the first user operation may be a circle-selection operation or a line drawing operation. According to this solution, the user may perform the circle-selection operation, the line drawing operation, or the like in the first interface, and the electronic device may obtain the first memory information based on a circle-selection area or line drawing content.

For example, the first interface may be the interface 71 shown in FIG. 7(a) to FIG. 7(d), and the first area may be the area enclosed by the line 73 shown in FIG. 7(d).

In an example, before determining the first area in response to the first user operation performed by the user in the first interface, the method 1300 may further include: performing AI Touch in a fourth interface in response to an operation performed in the fourth interface, to obtain the first interface, where the first interface includes a first control; and enabling a circle-selection function in response to an operation performed on the first control.

The fourth interface may be any display interface, for example, may be a picture or an application page. For example, the fourth interface may be the interface 70 shown in FIG. 7(a) to FIG. 7(d). The user may perform a corresponding operation in the fourth interface, to perform AI Touch in the fourth interface. For example, the user may press a screen in the interface 70 with two fingers. In response to the operation of pressing the screen with two fingers by the user, the electronic device performs AI Touch. After AI Touch is performed in the interface 70, the electronic device displays the first interface. For example, the first interface may be the interface 71 shown in FIG. 7(b). It should be understood that the first interface includes content obtained by performing AI Touch in the fourth interface. The interface 71 may include the control 72 used as the first control. The electronic device may enable the circle-selection function by tapping the control 72. After the electronic device enables the circle-selection function, the user may obtain the first area by circle selecting content in the interface 71. For example, the first area may be the area enclosed by the line 73.

In an implementation, the first interface further includes a second control; and S1310 may specifically include: waking up the smart assistant in response to an operation performed on the second control, and displaying, in a dialog box of the smart assistant, an image corresponding to the first area; and obtaining the first memory information based on content in the image.

Correspondingly, S1320 may specifically include: displaying the first memory information in the dialog box of the smart assistant.

For example, as shown in FIG. 7(c), the second control may be the control 74. The user may tap the control 74. In response to an operation of tapping the control 74 by the user, the electronic device wakes up Celia, and displays an image in a circle-selection area in the window 75 of Celia shown in FIG. 7(d), namely, the picture 77 in the dialog box 76. Then, the electronic device may simulate the user to deliver and execute an instruction "Record content in the picture", and display the first memory information obtained based on the picture 77, namely, content in the widget 78.

In another implementation, the method 1300 may further include: waking up the smart assistant after preset time, and displaying, in a dialog box of the smart assistant, an image corresponding to the first area.

To be specific, in response to the first user operation performed by the user in the first interface, the smart assistant is woken up after the preset time after the first area in the first interface is determined, and the image corresponding to the first area is displayed in the dialog box of the smart assistant.

For example, in the example shown in FIG. 7(a) to FIG. 7(d), after displaying the line 73 based on a first operation performed by the user in the interface 71, the electronic device may wake up Celia after the preset time, for example, 5s, and display an image in a circle-selection area in the window 75 of Celia in FIG. 7(d), namely, the picture 77 in the dialog box 76. Then, the electronic device may simulate the user to deliver and execute an instruction "Record content in the picture", and display the first memory information obtained based on the picture 77, namely, content in the widget 78.

### Example 3: The display content is the first text.

In some embodiments, before S1310, the method may include: copying the first text in the first interface in response to the first user operation performed by the user in the first interface.

For example, the first interface may be the interface 80 shown in FIG. 8(a) to FIG. 8(d), the second operation may be a copy operation, and the first text may be "Buy a book for daughter tomorrow".

According to the foregoing solution, the memory information may be obtained based on a part of text in the display interface, to satisfy a scenario requirement that the user expects to memorize only information in the part of the text in the display interface.

In an example, S1310 may specifically include: displaying a first window in a fifth interface in response to an operation performed on a third control in the fifth interface of the smart assistant, where the first window includes a fourth control, saved memory information is displayed in the fifth interface, and the third control is used to add memory information; displaying the first text in the first window in response to an operation performed on the fourth control; and extracting the first text from the first window to obtain the first memory information.

For example, the fifth interface may be a memory information management interface of the smart assistant or an interface/page in which the user manages the memory information. For example, the fifth interface may be the interface 81 shown in FIG. 8(b), the third control may be the control 84 in the interface 81, and the first window may be the window 85 shown in FIG. 8(c). The control 84 is used to add memory information. The user may tap the control 84. In response to a tap operation performed on the control 84, the electronic device displays the window 85 in the interface 81. The window 85 includes the fourth control. For example, the fourth control is the control 86. The user may tap the control 86. In response to a tap operation performed on the control 86, the first text "Buy a book for daughter tomorrow" that has been copied to a clipboard is displayed in the window 85. The electronic device may extract "Buy a book for daughter tomorrow", and obtain the first memory information based on "Buy a book for daughter tomorrow". For example, as shown in FIG. 8(d), in response to a tap operation performed on the control 86, the first text is displayed in the window 85, and the electronic device may further extract "Buy a book for daughter tomorrow", and after obtaining the first memory information based on "Buy a book for daughter tomorrow", display the first memory information, namely, content in the widget 88. For another example, as shown in FIG. 9(a), in response to a tap operation performed on the control 86, the first text is displayed in the window 85, and the control 90 is displayed. In this case, the control 86 is no longer displayed. The user may tap the control 90. In response to a tap operation performed on the control 90, the electronic device may extract "Buy a book for daughter tomorrow", and after obtaining the first memory information based on "Buy a book for daughter tomorrow", display the widget 88. Further, prompt information may be further displayed in a process of obtaining the first memory information. The prompt information indicates that the first memory information is being obtained. For example, the prompt information may be the prompt information 91 in FIG. 9(b). After obtaining the first memory information, the electronic device may no longer display the prompt information 91.

### Example 4: The display content is the first picture.

In some embodiments, before S1310, the method may further include: displaying the first interface in response to the first user operation performed on a thumbnail of the first picture in a sixth interface, where the first interface includes the first picture.

For example, the sixth interface may be the interface 112 shown in FIG. 11(c), and the first picture may be the picture 113. The user may tap a thumbnail of the picture 113. In response to an operation of tapping the thumbnail of the picture 113, the electronic device may display the interface 114, namely, an example of the first interface. The interface 114 includes the picture 113.

Further, S1310 may specifically include: performing text recognition on the first picture in the first interface to obtain a recognized text; displaying a seventh interface of the smart assistant in response to an operation performed on a fifth control in the first interface, where a second window is displayed in the seventh interface of the smart assistant, and the second window includes the recognized text; and obtaining the first memory information based on the recognized text in response to an operation performed on a sixth control in the second window.

For example, the first interface may be the interface 114 shown in FIG. 11(d), the first picture may be the picture 113, and the fifth control may be the control 116 in the interface 114. After the user taps the thumbnail of the picture 113 in the interface 112 shown in FIG. 11(c), the electronic device displays the interface 114, and performs text recognition on the picture 113, to obtain a text in the picture 113, namely, the recognized text. As shown in FIG. 11(d), the recognized text is the content in the recognition box 115. After obtaining the recognized text, the user may tap the control 116. In response to an operation of tapping the control 116, the electronic device displays a seventh interface, for example, the interface 81 shown in FIG. 11(e). The second window, for example, the window 110, is displayed in the interface 81. The recognized text "Business transfer Contact: Ms. Zhang 130XXX" is displayed in the window 110. The window 110 may include the sixth control, for example, the control 117. The user may tap the control 117. In response to an operation of tapping the control 117, the electronic device obtains the first memory information based on the recognized text. For example, the obtained first memory information is content in the widget 118 shown in FIG. 11(f).

In some embodiments, S1310 may specifically include: obtaining the first memory information based on the first picture in the first interface in response to the first user operation performed on a seventh control in the first interface, where the seventh control is located in a third window in the first interface, and the first picture is displayed in the third window.

For example, the first interface may be the interface 81 shown in FIG. 12(d), the third window may be the window 110 in the interface 81 shown in FIG. 12(d), the first picture may be a picture in the window 110, and the seventh control may be the control 117 in the window 110. The user may tap the control 117. In response to an operation of tapping the control 117, the electronic device may obtain the first memory information based on the picture in the window 110. For example, the first memory information may be content in the widget 118 shown in FIG. 12(e).

Optionally, before displaying the first interface in response to the first user operation performed on the thumbnail of the first picture in the second interface, the method 1300 may further include:
displaying a fourth window in an eighth interface in response to an operation performed on an eighth control in the eighth interface of the smart assistant, where the fourth window includes a ninth control, saved memory information is displayed in the eighth interface, and the eighth control is used to add memory information; displaying a first option and a second option in the fourth window in response to an operation performed on the ninth control, where the first option is used to select a picture in a gallery, and the second option is used to take a picture; and displaying the sixth interface in response to the operation performed on the first option.

For example, the eighth interface may be a memory information management interface or an interface/page in which the user manages the memory information. For example, the eighth interface may be the interface 81 shown in FIG. 11(a), the eighth control may be the control 84 in the interface 81, and the fourth window may be the window 110 shown in FIG. 11(b). The user may tap the control 84. In response to the operation performed on the control 84, the electronic device may display the window 110. The ninth control may be the "Picture recognition" control in the window 110. The user may tap the "Picture recognition" control. In response to an operation performed on the "Picture recognition" control, the electronic device may display the "Select from Gallery" option (an example of the first option) and the "Camera" option (an example of the second option). The user may tap the "Select from Gallery" option. In response to the tap operation performed on the "Select from Gallery" option, the electronic device may display the interface 112 (an example of the sixth interface). The interface 112 includes a thumbnail of at least one picture in the gallery. The first picture may be the picture 113 in the display interface 112.

According to the foregoing solution, the memory information may be obtained based on the picture in the gallery. In addition, the memory information may alternatively be obtained based on a picture shot by the user by tapping the second option.

In some embodiments, the first memory information may include a plurality of pieces of memory information. The electronic device may selectively save a part of the plurality of pieces of memory information or save the plurality of pieces of memory information based on a user instruction or operation of the user in the smart assistant. This solution can support selective saving of the memory information by the user.

For example, as shown in the example in FIG. 6(a) to FIG. 6(c), the first memory information includes the widget 62 and the widget 63. The user may tap the "Record all" control to save the widget 62 and the widget 63. Alternatively, the user may tap the widget 62, and then tap the "Record selected" control. In response to an operation of tapping the "Record selected" control by the user, the electronic device saves the widget 62. Alternatively, the window 61 may include controls such as "Record the first memory" and/or "Record the second memory". For example, the user taps "Record the first memory", and the widget 62 may be saved.

It should be understood that, although the plurality of pieces of memory information are shown only in the scenario shown in FIG. 6(a) to FIG. 6(c), it should be understood that the first memory information may also include the plurality of pieces of memory information in scenarios shown in other accompanying drawings.

In some embodiments, before S1320, the method 1300 may further include: displaying, in the smart assistant, a memory type that matches the display content in the first interface and an attribute item corresponding to the memory type.

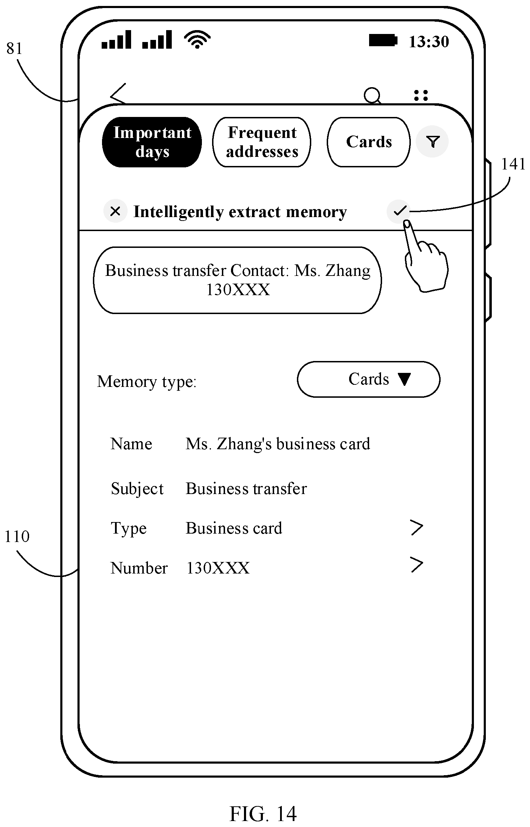

For example, as shown in a diagram of a user interface shown in FIG. 14, the interface shown in FIG. 14 may be an interface diagram displayed in response to an operation performed by the user on the control 117 shown in FIG. 11(e), or the interface shown in FIG. 14 may be an interface displayed in response to an operation performed by the user on the control 117 shown in FIG. 12(d). As shown in FIG. 14, the window 110 includes a memory type: "Cards". Attribute items of "Cards" include (1) Name: Ms. Zhang's business card; (2) Subject: Business transfer; (3) Type: Business card; and (4) Number: 130XXX. It should be noted that the "Business card" is a subtype of the card. In addition, in some accompanying drawings, for example, in FIG. 14, FIG. 15, or FIG. 16, the "memory type" may also be described as a "recognition type" or a similar description.

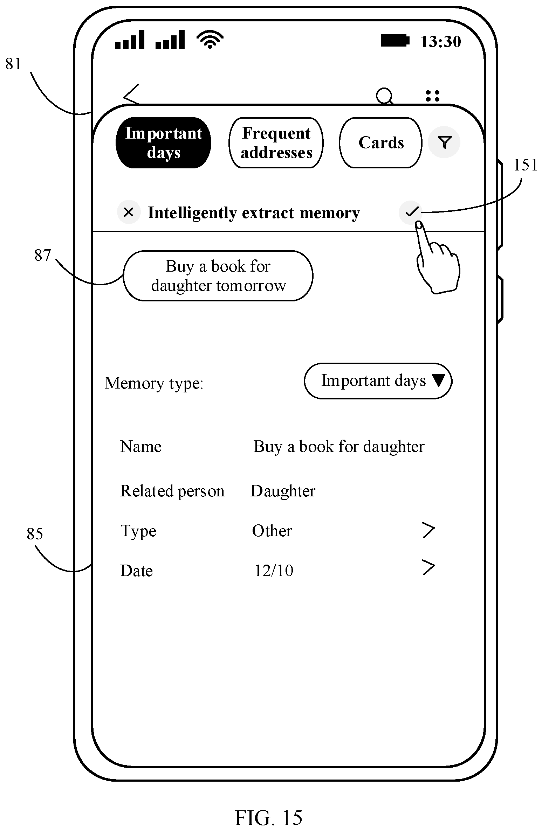

For example, as shown in a diagram of a user interface shown in FIG. 15, the interface shown in FIG. 15 may be an interface diagram displayed in response to an operation performed by the user on the control 86 shown in FIG. 8(c). As shown in FIG. 15, the window 85 includes a memory type: "Important days". Attribute items of "Important days" include: (1) Name: Buy a book for daughter; (2) Related person: Daughter; (3) Type: Other; (4) Date: 12/10. It should be noted that "Other" is a subtype of "Important days". For example, "Important days" may include one or more of the following subtypes: a birthday, an anniversary, a repayment day, an exam day, a payday, or the like.

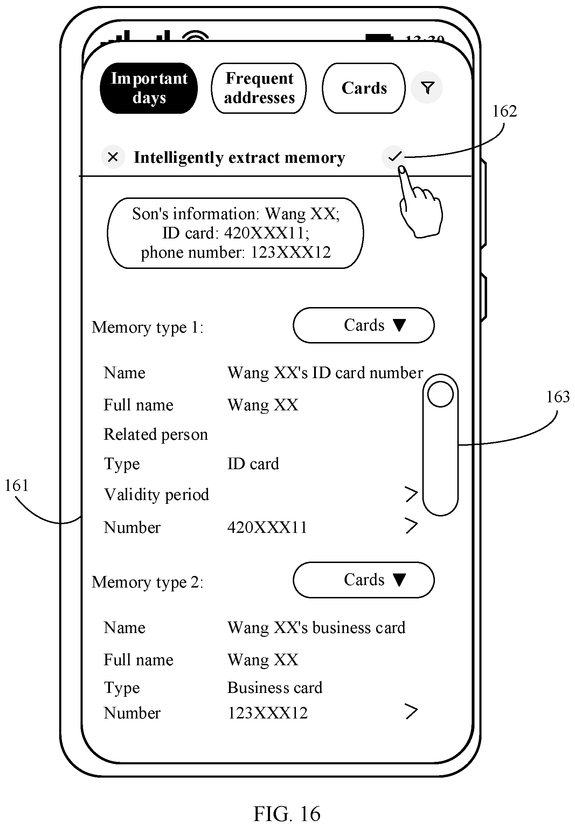

For example, as shown in a diagram of a user interface shown in FIG. 16, a window 161 may include a plurality of memory types and attribute items corresponding to the memory types. The information is obtained based on "Son's information: Wang XX; ID card: 420XXX11; phone number: 123XXX12". A memory type 1 and a memory type 2 shown in the window 161 are the same, and are both "Cards". It should be understood that whether the plurality of memory types are the same is determined based on first content, and the plurality of memory types may be the same or different. When the plurality of memory types are the same, subtypes of the plurality of memory types may be the same or different.

When the plurality of memory types are displayed, controls used to view the memory types may be further displayed. For example, as shown in FIG. 16, the user may view all memory types in the window 161 by sliding up and down a control 163.

Optionally, at least a part of attribute items corresponding to the memory type are editable. For example, as shown in FIG. 14, the type and the number are editable. For example, as shown in FIG. 15, the type and the date are editable.

In some embodiments, in response to a user operation performed on memory information, the memory type and attribute information corresponding to the memory type are displayed.

For example, for the widget 41 shown in FIG. 4, the user may tap the widget 41. In response to a tap operation performed by the user, the electronic device may display the memory type and the attribute information corresponding to the memory type. Further, the user may edit a part or all of the attribute information.

In some embodiments, the smart assistant further includes a tenth control, and the method 1300 may further include: displaying a first menu bar in response to an operation performed on the tenth control, where the first menu bar includes a plurality of memory type options; and displaying, in the smart assistant in response to an operation performed on a first memory type option in the plurality of memory type options, a first memory type that matches the display content in the first interface and at least one attribute item corresponding to the first memory type.

In other words, the electronic device may display, based on selection of a memory type, an attribute item corresponding to the selected memory type. It should be understood that extracted memory information may be different when memory types are different.

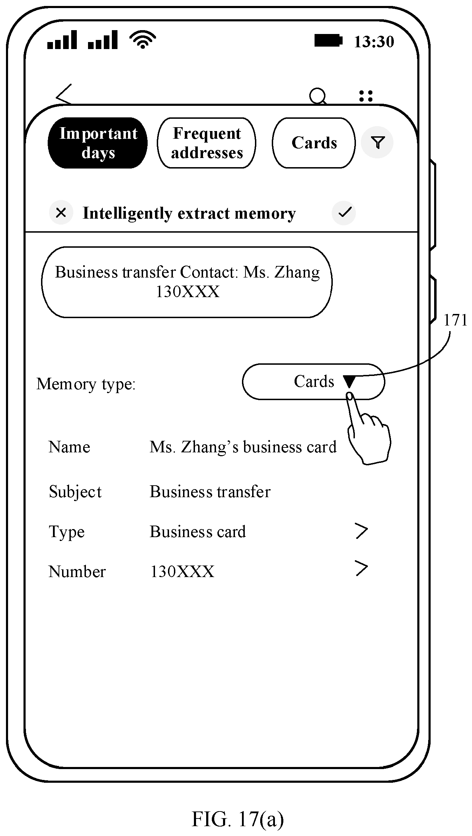

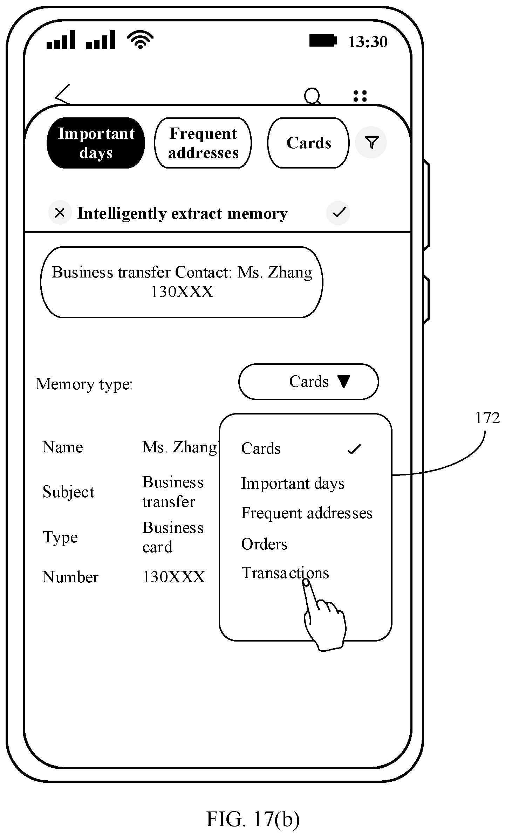

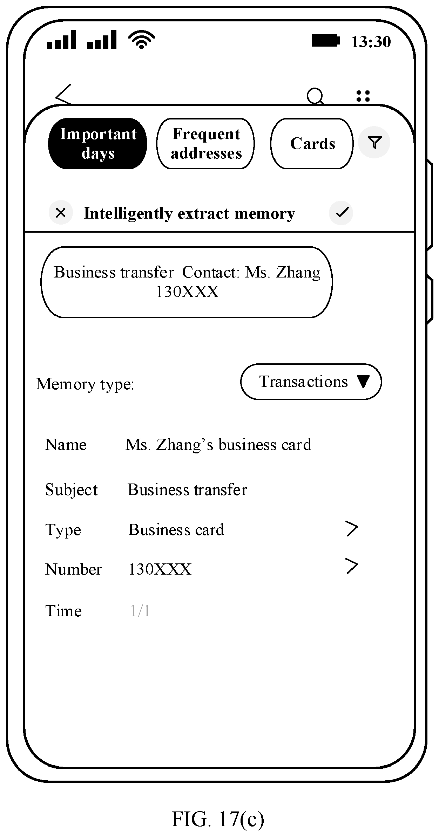

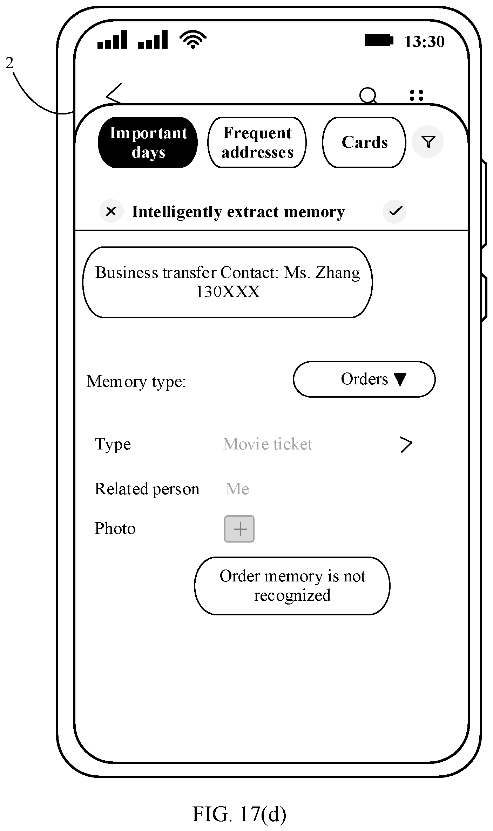

For example, the tenth control may be a control 171 shown in FIG. 17(a) to FIG. 17(d), and the first menu bar may be a menu bar 172 shown in FIG. 17(a) to FIG. 17(d). Refer to the example shown in FIG. 17(a) to FIG. 17(d). Memory types and the corresponding attribute items in the figures shown in FIG. 17(a) to FIG. 17(d) are all obtained based on "Business transfer Contact: Ms. Zhang 130XXX". A memory type shown in FIG. 17(a) may be a default memory type of the electronic device. If the user expects to modify the memory type, the user may tap the control 171. In response to the operation of tapping the control 171, the menu bar 172 shown in FIG. 17(b) is displayed. The menu bar 172 includes the memory types. For example, if the user taps "Transactions", in response to an operation of tapping "Transactions", attributes corresponding to "Transactions" that are displayed by the electronic device are shown in FIG. 17(c). For example, if the user taps "Orders", in response to an operation of tapping "Orders", attribute items corresponding to "Orders" that are displayed by the electronic device are shown in FIG. 17(d). It can be learned that when the memory type is "Orders", the electronic device does not obtain information matching an attribute item, and therefore does not obtain the first memory information.

In some embodiments, when the memory type and the attribute information corresponding to the memory type are displayed, an eleventh control is further displayed; and S1320 is specifically: displaying the first memory information in response to an operation performed on the eleventh control.

For example, as shown in FIG. 14, the window 110 may further include a control 141, and the user may tap the control 141. In response to an operation of tapping the control 141, the electronic device may display the window 110 shown in FIG. 11(f). To be specific, the memory type and the attribute information corresponding to the memory type is no longer displayed in the window 110, but the widget 118 is displayed. The widget 118 is the first memory information. Alternatively, in response to an operation of tapping the control 141, the electronic device no longer displays the window 110, but displays the widget 118 in the interface 81.

For example, as shown in FIG. 15, the window 85 may further include a control 151, and the user may tap the control 151. In response to an operation of tapping the control 151, the electronic device may display the window 85 shown in FIG. 8(d). To be specific, the memory type and the attribute information corresponding to the memory type is no longer displayed in the window 85, but the widget 88 is displayed. The widget 88 is the first memory information. Alternatively, in response to an operation of tapping the control 151, the electronic device no longer displays the window 85, but displays the widget 88 in the interface 81.

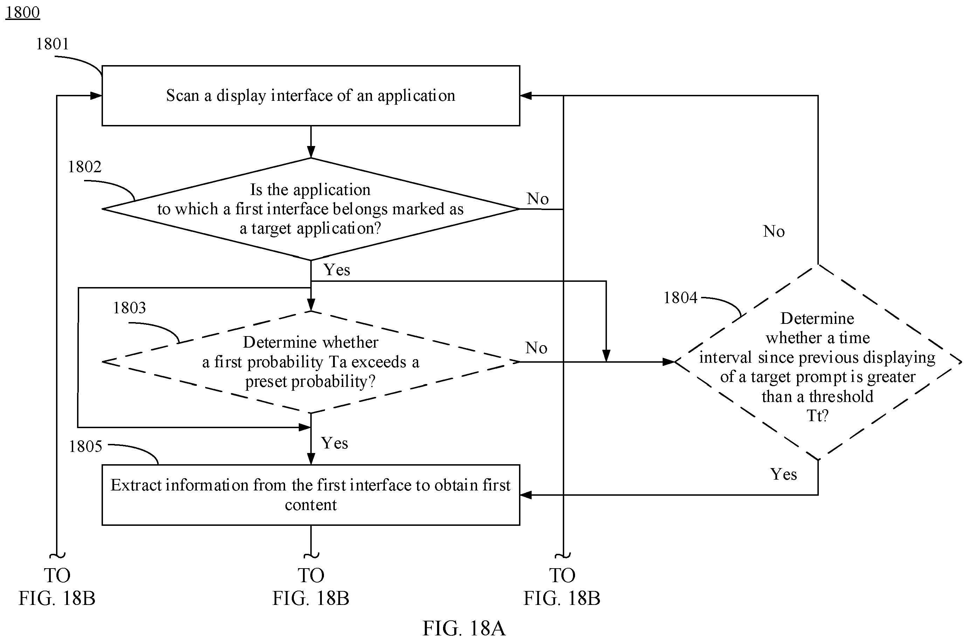

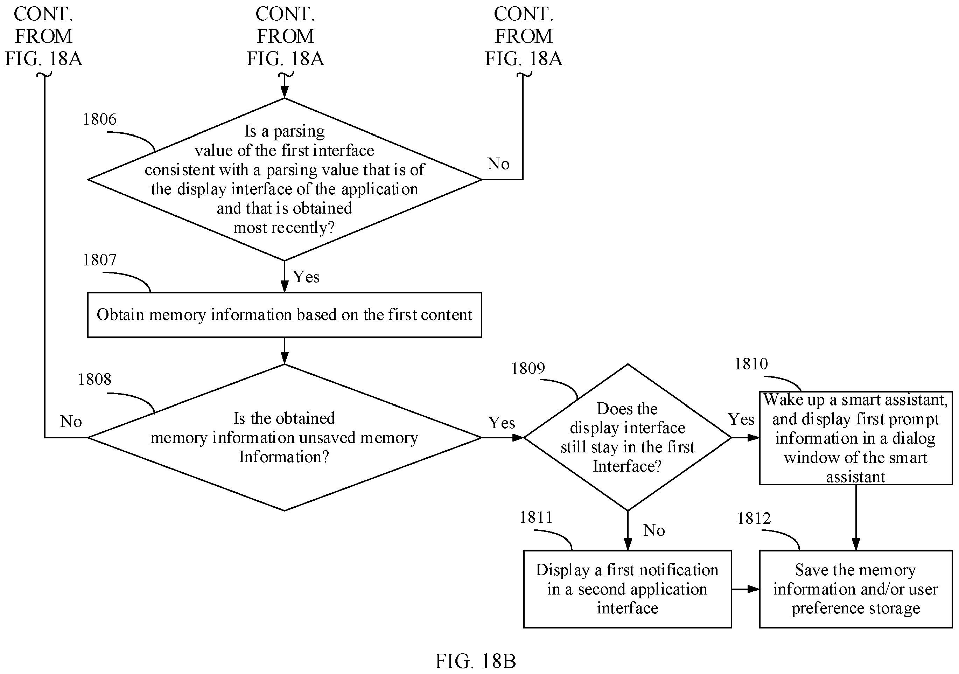

FIG. 18A and FIG. 18B are a schematic flowchart of an information recording method according to this application. The following describes steps in the method 1800 shown in FIG. 18A and FIG. 18B.

S1801: Scan a display interface of an application.

For example, the display interface of the application may be scanned in a preset period, or the display interface may be scanned when the display interface is switched.

S1802: Determine whether the application to which a first interface of the currently scanned application belongs is marked as a target application.

If the application to which the first interface belongs is marked as the target application, S1803, S1804, or S1805 may be performed; or if the application to which the first interface belongs is not marked as the target application, S1801 continues to be performed.

In an example, an electronic device obtains memory information a plurality of times based on the display interface of the application under triggering of a user. In this case, the electronic device may use the application as the target application, or the user may mark the application as the target application.

For example, when obtaining the memory information based on the display interface of the application under triggering of the user, the electronic device may further count a quantity of times that the memory information has been obtained based on the display interface of the application. The quantity of times may include a current time or may not include a current time. If the quantity of times is greater than a preset quantity of times, the electronic device may remind, in a pop-up box, the user whether to mark the application as the target application. The user may mark the application as the target application based on the dialog box reminder.

S1803: Determine whether a first probability Ta exceeds a preset probability.

The first probability is a probability Ta that the user saves, based on a target prompt, first memory information obtained based on the first interface. The target prompt indicates that the memory information has been obtained or there is to-be-confirmed memory information currently. The user may save the memory information based on the target prompt. For example, the target prompt may be the first prompt information described above or a first notification. Ta=Quantity of times that the user saves, based on the target prompt, the first memory information obtained based on the first interface/Quantity of times that the electronic device displays the target prompt.

For example, it is assumed that the first interface is the interface 10 shown in FIG. 1(a) to FIG. 1(d). If the electronic device actively obtains the first memory information based on the interface 10 eight times, and the user saves the first memory information based on the prompt information 12 five times, Ta=5/8. It should be understood that the user saves the first memory information based on the prompt information 12 means that the user taps the prompt information 12 based on the prompt information 12 or the user inputs an instruction similar to "Record screen information".

If an execution result of S1803 is yes, S1804 or S1805 may be performed. If an execution result of S1803 is no, S1801 may be returned to or S1804 may be performed.

S1804: Determine whether a time interval since previous (namely, latest) displaying of the target prompt is greater than a threshold Tt.

If an execution result of S1804 is yes, S1805 may be performed; or if an execution result of S1804 is no, S1801 may be returned to.

S1805: Extract information from the first interface to obtain first content.

For example, an application page, a text, and image data with a description in the first interface may be extracted through visual analysis, interface framework analysis, interface text recognition, and/or the like. The content extracted based on the first interface is the first content.

S1806: Determine whether a parsing value of the first interface is consistent with a parsing value that is of the display interface of the application and that is obtained most recently.

For example, the parsing value may be obtained through calculation based on the first content corresponding to the display interface of the application, and the calculation may be calculating a hash value or the like. It should be understood that different display interfaces of the application may correspond to different first content.

In S1806, if it is determined that the parsed value obtained this time is consistent with the parsed value obtained most recently, it is considered that the first interface is a display interface different from the display interface of the application scanned last time. In this case, S1807 may be performed, and the parsed value obtained this time may be recorded.

S1807: Obtain memory information based on the first content.

For example, a memory type adapted to a first application may be determined based on the application page, the text, and the image data with the description in the first interface, then a corresponding schema is invoked to generate a prompt for obtaining the memory information, and the first memory information may be generated by invoking the LLM by using the prompt.

S1808 or S1809 may be performed after S1807.

S1808: Determine whether the memory information obtained in S1807 is unsaved memory information.

The memory information obtained in S1807 is compared with currently saved memory information, to determine whether the memory information obtained in S1807 is the saved memory information. If the memory information obtained in S1807 is the saved memory information, S1801 is performed; or if the memory information obtained in S1807 is not the saved memory information, S1809 is performed.

S1809: Determine whether the display interface still stay in the first interface.

In other words, whether the display interface is the first interface is determined. If the display interface is the first interface, S1810 may be performed; or if the display interface is not the first interface, S1811 may be performed. For ease of description below, when the display interface in this case is different from the first interface, the display interface in this case is referred to as a second interface.

S1810: Wake up a smart assistant, and display first prompt information in a dialog window of the smart assistant. In other words, the user is prompted in real time to save the memory information.

For details about this step, refer to the foregoing descriptions of corresponding content. Details are not described herein again.

S1812 may be performed after S1810.

In an example, if S1810 is performed once for a display interface of an application, the quantity of times that the electronic device displays the target prompt may be increased by 1. It should be understood that, when S1810 is performed for the first time for the display interface of the application, a quantity of times that the electronic device displays the target prompt is 1.

S1811: Display a first notification in a second application interface. In other words, the user is prompted in non-real time to save the memory information.

For details about this step, refer to the foregoing descriptions of corresponding content. Details are not described herein again.

S1812 may be performed after S1811.

S1812: Save the memory information and/or user preference storage.

For details about saving the memory information in S1810, S1811, and S1812, refer to the descriptions of the foregoing related solutions. Details are not described herein again.

As described above, the user may manually select a memory type. The user preference storage in S1812 is used by the user to store a selection preference for a memory type of the application.

In an example, if S1812 is performed once for a display interface of an application, the quantity of times that the user saves, based on the target prompt, the memory information obtained based on the display interface may be increased by 1. It should be understood that, when S1812 is performed for the first time for the display interface of the application, the quantity of times that the user saves, based on the target prompt, the memory information obtained based on the display interface is 1.

According to the solution provided in embodiments of this application, when the user is browsing some applications, the electronic device may actively obtain the memory information, thereby avoiding an operation step of triggering obtaining of the memory information by the user. In addition, a habit of receiving the memory information by the user is learned, so that the electronic device can implement an automatic and intelligent memory information obtaining capability that better meets an expectation of the user. In addition, the manner that is of saving the memory information and that supports a real-time prompt and a non-real-time prompt is compatible with a plurality of user operation scenarios. Even after the user switches a screen, recognized memory information can still be retained.

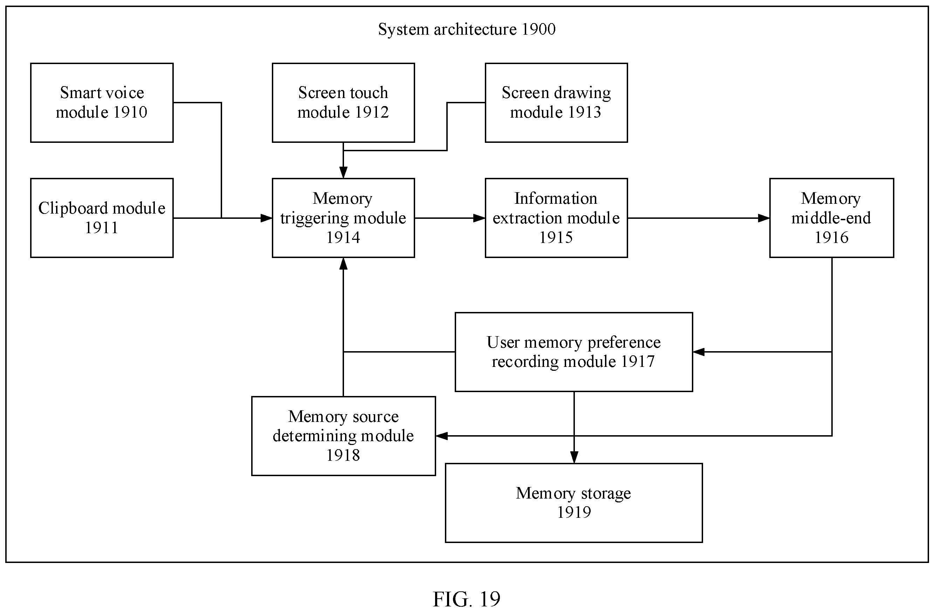

FIG. 19 is a diagram of a system architecture according to an embodiment of this application. The system architecture 1900 may include one or more modules shown in the figure. The following describes functions of the modules.

A smart voice module 1910 is configured to: obtain a corpus of first memory information, for example, "Record screen information", and deliver an instruction corresponding to the corpus to a memory triggering module 1914.

A clipboard module 1911 supports copying of a text in a display interface.

A screen touch module 1912 identifies a touch operation performed by a user in an interface. For example, the operation may be a two-finger press operation, a tap operation, or the like.

A screen drawing module 1913 receives a drawing instruction, and draws a line/circle in a picture.

The memory triggering module 1914 receives signals/instructions sent by the smart voice module 1910, the screen touch module 1912, and the screen drawing module 1913, and passively triggers obtaining of memory information; or may actively trigger obtaining of memory information based on the display interface of an application.

An information extraction module 1915 may extract an application page, a text, and/or image data with a description by using technologies such as visual analysis, interface framework analysis, and/or interface text recognition.

A memory middle-end 1916 is configured to: after receiving content sent by the information extraction module 1915, determine a memory type that matches the received content, invokes a corresponding schema to generate a prompt for obtaining the memory information by the user, and generates the memory information by invoking a LLM by using the prompt. Further, memory information finally returned to the user may be selected based on a selection preference of the user for a memory type.

For example, the memory middle-end may be deployed on an electronic device side, or may be deployed on a server side.

A user memory preference recording module 1917 is configured to record a selection preference of the user for a memory type in the display interface of the application.

A memory source determining module 1918 is configured to: When recognizing that memory information has been frequently obtained for a same application a plurality of times under triggering of the user, consider reminding the user to mark the application as a memory source or a target application, and support an electronic device in actively obtaining the memory information based on the display interface of the memory source.

A memory storage module 1919 is configured to save the obtained memory information.

According to the system architecture provided in this embodiment of this application, memory information can be obtained in different scenarios.

It may be understood that the structure illustrated in this embodiment of this application does not constitute a specific limitation on the system architecture. In some other embodiments of this application, the system architecture may include more or fewer modules than those shown in the figure, or some modules may be combined, or some modules may be split, or different module arrangements may be used. The modules shown in the figure may be implemented by hardware, software, or a combination of software and hardware.

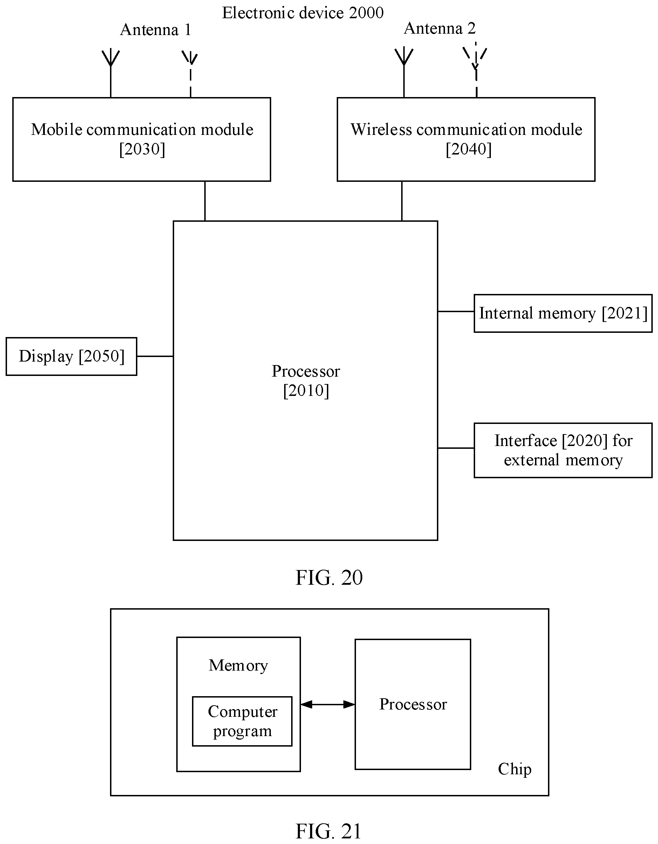

FIG. 20 is a diagram of a structure of an electronic device according to this application. The electronic device 2000 may include a processor 2010, an interface 2020 for external memory, an internal memory 2021, an antenna 1, an antenna 2, a mobile communication module 2030, a wireless communication module 2040, and a display 2050.

It may be understood that the structure illustrated in this embodiment of this application does not constitute a specific limitation on the electronic device 2000. In some other embodiments of this application, the electronic device 2000 may include more or fewer components than those shown in the figure, or some components may be combined, or some components may be split, or different component arrangements may be used. The components shown in the figure may be implemented by hardware, software, or a combination of software and hardware.

The processor 2010 may include one or more processing units. For example, the processor 2010 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A wireless communication function of the electronic device 2000 may be implemented through the antenna 1, the antenna 2, the mobile communication module 2030, the wireless communication module 2040, and the like.

The antenna 1 and the antenna 2 are configured to transmit and receive electromagnetic wave signals. Structures of the antenna 1 and the antenna 2 in FIG. 1(a) to FIG. 1(d) are merely an example. Each antenna in the electronic device 2000 may be configured to cover one or more communication frequency bands. Different antennas may be further reused to improve antenna utilization.

The mobile communication module 2030 may provide a solution, applied to the electronic device 2000, to wireless communication including 2G/3G/4G/5G or the like. The mobile communication module 2030 may include at least one filter, a switch, a power amplifier, a low noise amplifier (low noise amplifier, LNA), and the like. The mobile communication module 2030 may receive an electromagnetic wave through the antenna 1, perform processing such as filtering or amplification on the received electromagnetic wave, and transmit a processed electromagnetic wave to the modem processor for demodulation.

The wireless communication module 2040 may provide at least one of solutions, applied to the electronic device 2000, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 2040 may be one or more components integrating at least one communication processing module. The wireless communication module 2040 receives an electromagnetic wave through the antenna 2, performs frequency modulation and filter processing on the electromagnetic wave signal, and sends a processed signal to the processor 2010.

The electronic device 2000 implements a display function through the display 2050. The display 2050 is configured to display an interaction interface and the like.

It should be understood that the electronic device 2000 may perform any technical solution in this application.

An embodiment of this application further provides an electronic device, including a memory, a processor, and a computer program that is stored in the memory and that is runnable on the processor. When the processor executes the computer program, the information recording methods shown in the foregoing embodiments are implemented.

An embodiment of this application further provides a chip. As shown in FIG. 21, the chip includes a processor and a memory. The memory stores a computer program. When the computer program is executed by the processor, the information recording methods shown in the foregoing embodiments are implemented.

An embodiment of this application further provides a computer-readable storage medium. The computer-readable storage medium stores a computer program. When the computer program is executed by a processor, the information recording methods shown in the foregoing embodiments are implemented.

An embodiment of this application further provides a computer program product. The program product includes a computer program. When the computer program is run by a terminal device, the terminal device is enabled to implement the information recording methods shown in the foregoing embodiments.

It should be noted that the tap operation in this application is merely an example, and the tap operation may be replaced with an operation like a touch operation or a voice operation. Names of pages, controls, windows, and the like provided in embodiments of this application are also merely examples, and do not constitute any limitation on this application.

It should be understood that the processor mentioned in embodiments of this application may be a central processing unit (central processing unit, CPU), or may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

In embodiments provided in this application, division into the frameworks or modules is merely logical function division and may be other division during actual implementation. For example, a plurality of frameworks or modules may be combined or integrated into another system, or some features may be ignored or not performed.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

It may be clearly understood by a person skilled in the art that, for the purpose of convenient and brief description, for detailed working processes of the foregoing system, apparatus, and units, refer to corresponding processes in the foregoing method embodiments. Details are not described herein again.

Reference to "an embodiment", "some embodiments", or the like described in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "contain", "have", and variants thereof all mean "include but are not limited to", unless otherwise specifically emphasized in another manner.

As used in the specification and the appended claims of this application, the term "if" may be interpreted as "when" or "once" or "in response to determining" or "in response to detecting" depending on the context. Similarly, the phrase "if it is determined that" or "if [a described condition or event] is detected" may be interpreted as "once determined" or "in response to determining" or "once [a described condition or event] is detected" or "in response to detecting [a described condition or event]" depending on the context.

The foregoing embodiments are merely intended to describe the technical solutions of this application, but are not to limit this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the scope of the technical solutions of embodiments of this application, and these modifications and replacements shall fall within the protection scope of this application.

## Claims

1. An information recording method, comprising:
obtaining first memory information, wherein the first memory information is extracted based on display content in a first interface, the first memory information matches a preset memory type, and the memory type corresponds to at least one attribute item; and
displaying the first memory information in an application.

2. The method according to claim 1, wherein before displaying the first memory information in the application, the method further comprises:
obtaining a first user operation, wherein the first user operation is used to indicate to save the first memory information, or the first user operation indicates the display content.

3. The method according to claim 2, wherein the first user operation is used to indicate to save the first memory information; and
before obtaining the first user operation, the method further comprises:
displaying prompt information, wherein the prompt information indicates that there is to-be-saved memory information currently.

4. The method according to claim 2, wherein the first user operation indicates the display content, and the display content is one of the following: interface content in the first interface of a first application, display content in a first area of the first interface, a first text in the first interface, and a first picture in the first interface.

5. The method according to claim 3, wherein displaying the prompt information comprises:
if a display interface is not switched from the first interface, displaying the prompt information in a dialog window of the application, wherein the dialog window is displayed in the first interface in a floating manner; and
displaying the first memory information in the application comprises:
displaying the first memory information in the dialog window in response to the first user operation performed on the dialog window.

6. The method according to claim 3, wherein displaying the prompt information comprises:
if a display interface is switched from the first interface to a second interface, displaying the prompt information in the second interface; and
displaying the first memory information in the application comprises:
displaying the first memory information in a third interface of the application in response to the first user operation performed on the prompt information or in response to the first user operation performed on an application corresponding to the prompt information, wherein the third interface comprises the to-be-saved memory information.

7. The method according to claim 6, wherein the third interface comprises a confirmation control corresponding to the first memory information, and the method further comprises:
saving the first memory information in the application in response to an operation performed on the confirmation control.

8. The method according to any one of claims 2 to 7, wherein obtaining the first memory information comprises:
scanning the display interface of the first application; and
obtaining the first memory information based on the currently scanned first interface, wherein the first interface is a display interface of the first application.

9. The method according to claim 8, wherein the first application is a target application, and an electronic device is capable of obtaining memory information by scanning a display interface of the target application.

10. The method according to claim 4, wherein the display content is the interface content in the first interface of the first application; and
obtaining the first memory information comprises:
obtaining the first memory information based on the interface content in the first interface in response to the first user operation performed on a dialog window of the application, wherein the dialog window is displayed in the first interface in a floating manner, and the first interface is a display interface of the first application.

11. The method according to claim 4, wherein the display content is the content in the first area of the first interface; and
before obtaining the first memory information, the method further comprises:
determining the first area in response to the first user operation performed by a user in the first interface.

12. The method according to claim 11, wherein before determining the first area in response to the first user operation performed by the user in the first interface, the method further comprises:
performing AI touch in a fourth interface in response to an operation performed in the fourth interface, to obtain the first interface, wherein the first interface comprises a first control; and
enabling a circle-selection function in response to an operation performed on the first control.

13. The method according to claim 12, wherein the first interface further comprises a second control; and
obtaining the first memory information comprises:
waking up the application in response to an operation performed on the second control, and displaying, in a dialog box of the application, an image corresponding to the first area; and
obtaining the first memory information based on content in the image.

14. The method according to claim 4, wherein the display content is the first text; and
before obtaining the first memory information, the method further comprises:
copying the first text in response to the first user operation performed by a user in the first interface.

15. The method according to claim 14, wherein obtaining the first memory information comprises:
displaying a first window in a fifth interface in response to an operation performed on a third control in the fifth interface of the application, wherein the first window comprises a fourth control, saved memory information is displayed in the fifth interface, and the third control is used to add memory information;
displaying the first text in the first window in response to an operation performed on the fourth control; and
extracting the first text from the first window to obtain the first memory information.

16. The method according to claim 14, wherein the display content is the first picture; and
before obtaining the first memory information, the method further comprises:
displaying the first interface in response to the first user operation performed on a thumbnail of the first picture in a sixth interface, wherein the first interface comprises the first picture.

17. The method according to claim 16, wherein obtaining the first memory information comprises:
performing text recognition on the first picture to obtain a recognized text;
displaying a seventh interface of the application in response to an operation performed on a fifth control in the first interface, wherein a second window is displayed in the seventh interface of the application, and the second window comprises the recognized text; and
obtaining the first memory information based on the recognized text in response to an operation performed on a sixth control in the second window.

18. The method according to claim 16, wherein obtaining the first memory information comprises:
obtaining the first memory information based on the first picture in response to the first user operation performed on a seventh control in the first interface, wherein the seventh control is located in a third window of the first interface, and the first picture is displayed in the third window.

19. The method according to any one of claims 16 to 18, wherein before responding to the first user operation performed on the thumbnail of the first picture in the second interface, the method further comprises:
displaying a fourth window in an eighth interface in response to an operation performed on an eighth control in the eighth interface of the application, wherein the fourth window comprises a ninth control, saved memory information is displayed in the eighth interface, and the eighth control is used to add memory information;
displaying a first option and a second option in the fourth window in response to an operation performed on the ninth control, wherein the first option is used to select a picture in a gallery, and the second option is used to take a picture; and
displaying the sixth interface in response to an operation performed on the first option, wherein the sixth interface comprises a thumbnail of at least one picture in the gallery.

20. The method according to any one of claims 1 to 19, wherein before displaying the first memory information in the application, the method further comprises:
displaying, in the application, a memory type that matches the display content in the first interface and at least one attribute item corresponding to the memory type.

21. The method according to claim 20, wherein a part or all of the at least one attribute item is editable.

22. The method according to claim 20 or 21, wherein the application comprises a tenth control, and the method further comprises:
displaying a first menu bar in response to an operation performed on the tenth control, wherein the first menu bar comprises a plurality of memory type options; and
in response to an operation performed on a first memory type option in the plurality of memory type options, displaying, in the application, the first memory type that matches the display content in the first interface and at least one attribute item corresponding to the first memory type.

23. An electronic device, wherein the electronic device comprises: one or more processors and a memory, wherein
the memory is coupled to the one or more processors; and
the memory is configured to store computer program code, the computer program code comprises computer instructions, and the one or more processors invoke the computer instructions to enable the electronic device to perform the method according to any one of claims 1 to 22.

24. A chip system, wherein the chip system is used in an electronic device, the chip system comprises one or more processors, and the processor is configured to invoke computer instructions to enable the electronic device to perform the method according to any one of claims 1 to 22.

25. A computer-readable storage medium, wherein the computer-readable storage medium stores a computer program, and when the computer program is executed by a processor, the method according to any one of claims 1 to 22 is implemented.
